(19) **Europäisches Patentamt**
**European Patent Office**
**Office européen des brevets**

(11) **EP 2 827 524 A1**

(12) **EUROPEAN PATENT APPLICATION**
published in accordance with Art. 153(4) EPC

(43) Date of publication:
**21.01.2015 Bulletin 2015/04**

(21) Application number: **12871028.2**

(22) Date of filing: **30.07.2012**

(51) Int Cl.:
**H04L 5/00** (2006.01)

(86) International application number:
**PCT/CN2012/079349**

(87) International publication number:
**WO 2013/135030 (19.09.2013 Gazette 2013/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.03.2012 CN 201210064735**

(71) Applicant: **Huawei Technologies Co., Ltd.**
**Shenzhen, Guangdong 518129 (CN)**

(72) Inventors:
- **TANG, Zhenfei**
  **Shenzhen**
  **Guangdong 518129 (CN)**
- **LI, Zhongfeng**
  **Shenzhen**
  **Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(54) **CHANNEL SEARCHING METHOD, DEVICE AND SYSTEM**

(57) Embodiments of the present invention provide a channel searching method, device, and system. The method includes: determining a number of a first channel control element according to a frequency domain resource that is configured for a terminal by a base station and supports transmission of a first physical downlink control channel and a position of the first channel control element in an RB to which the first channel control element belongs; determining a search space according to the frequency domain resource and an aggregation level of the first physical downlink control channel; and determining the first channel control element in the search space according to the number of the first channel control element. The embodiments of the present invention further provide a terminal, a base station, and a channel searching system. The embodiments of the present invention implement detection of a first physical downlink control channel such as an E-PDCCH or an R-PDCCH in the search space determined by the embodiments of the present invention.

Determine a number of a first channel control element according to a frequency domain resource that is configured for a terminal by a base station and supports transmission of a first physical downlink control channel and a position of the first channel control element in a resource block to which the first channel control element belongs — 201

Determine a search space according to the frequency domain resource and an aggregation level of the first physical downlink control channel — 202

Determine the first control channel element in the search space according to the number of the first channel control element — 203

FIG. 2

EP 2 827 524 A1

**Description**

**CROSS-REFERENCE TO RELATED APPLICATION**

This application claims priority to Chinese Patent Application No. 201210064735.1, filed on March 12, 2012 and entitled "CHANNEL SEARCHING METHOD, DEVICE, AND SYSTEM", which is incorporated herein by reference in its entirety.

**TECHNICAL FIELD**

The present invention relates to communications technologies, and in particular, to a channel searching method, device, and system.

**BACKGROUND**

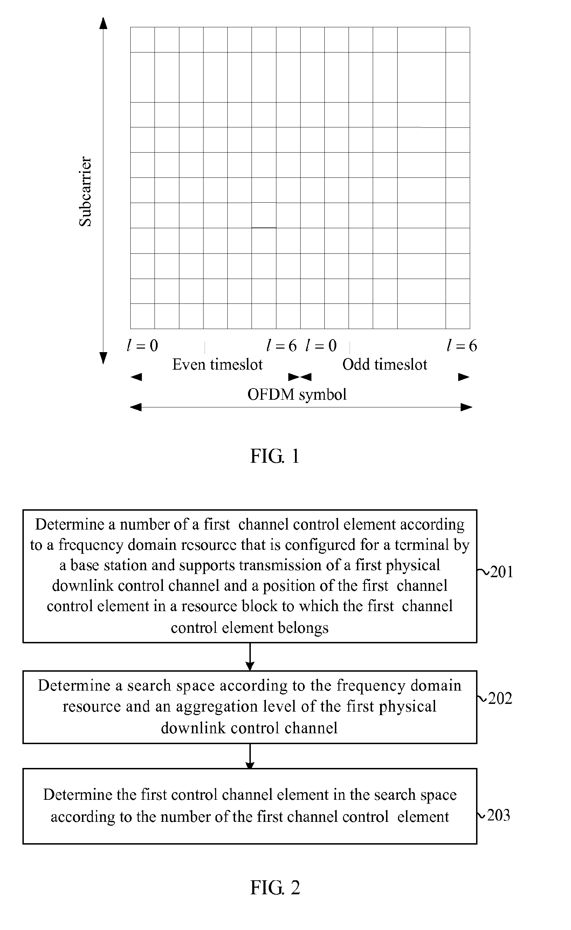

An orthogonal frequency division multiplexing technology (Orthogonal Frequency Division Multiplexing, hereinafter referred to as OFDM) is a key system multiple access technology for a beyond third generation (Beyond Third Generation, hereinafter referred to as B3G)/the fourth generation mobile communication system (The fourth Generation, hereinafter referred to as 4G) mobile communication system, and is also a downlink multiple access technology applied in a long term evolution (Long Term Evolution, hereinafter referred to as LTE)/long term evolution advanced (LTE Advanced, hereinafter referred to as LTE-A) system. FIG. 1 is a schematic diagram of resources of an OFDM system in the prior art. As shown in FIG. 1, in terms of time, a length of one radio frame, including 10 subframes, is 10 ms, where a length of each subframe is 1 ms, each subframe includes 2 timeslots, and each timeslot includes 7 (in a case of a normal CP) or 6 (in a case of an extended CP) OFDM symbols. In terms of frequency, one radio frame is formed by multiple subcarriers, where a subcarrier in an OFDM symbol is referred to as a resource element (Resource Element, hereinafter referred to as RE), and 12 subcarriers and a timeslot constitute one resource block (Resource Block, hereinafter referred to as RB). RBs are classified into physical resource blocks (Physical Resource Block, hereinafter referred to as PRB) and virtual resource blocks (Virtual Resource Block, hereinafter referred to as VRB), where a PRB refers to an actual frequency position of an RB and is numbered in ascending order, and a VRB adopts a numbering form different from that of the PRB, and the VRB is mapped to the PRB by using a specific resource allocation type.
A physical downlink control channel (Physical Downlink Control Channel, hereinafter referred to as PDCCH) is a channel defined in LTE Release (Release)-8/Release-9/Release-10. A relay physical downlink control channel (Relay Physical Downlink Control Channel, hereinafter referred to as R-PDCCH) is further introduced in LTE Release 10, and it is similar to an E-PDCCH and therefore is not further described herein. In the prior art, an eNB can determine a search space of a PDCCH according to an aggregation level, and a UE searches in the determined search space to obtain a valid PDCCH.
However, control channel elements (Control Channel Element, hereinafter referred to as CCE) in the prior art are distributed on a whole frequency band, and a base station cannot perform scheduling according to channel quality fed back by a terminal. Therefore, the foregoing channel searching solution in the prior art is only applicable to a PDCCH, but not applicable to channel searching of a first physical downlink control channel such as an E-PDCCH or an R-PDCCH.

**SUMMARY**

In view of the foregoing problem, embodiments of the present invention provide a channel searching method, device, and system to implement detection of a first physical downlink control channel in a predefined search space.
A first aspect of the embodiments of the present invention provides a channel searching method, including:

determining a number of a first channel control element according to a frequency domain resource that is configured for a terminal by a base station and supports transmission of a first physical downlink control channel and a position of the first channel control element in a resource block RB to which the first channel control element belongs;
determining a search space according to the frequency domain resource and an aggregation level of the first physical downlink control channel; and
determining the first channel control element in the search space according to the number of the first channel control element.

Another aspect of the embodiments of the present invention provides another channel searching method, including:

configuring, for each terminal, a frequency domain resource that supports transmission of a first physical downlink control channel;

determining a number of a first channel control element corresponding to each terminal according to the frequency domain resource corresponding to each terminal and a position of the first channel control element in a resource block RB;

determining a search space of each terminal according to the frequency domain resource corresponding to each terminal and an aggregation level of the first physical downlink control channel; and

determining the first channel control element in the search space of each terminal according to the number of the first channel control element.

Yet another aspect of the embodiments of the present invention provides a terminal, including:

a first number determining unit, configured to determine a number of a first channel control element according to a frequency domain resource that is configured for the terminal by a base station and supports transmission of a first physical downlink control channel and a position of the first channel control element in a resource block RB to which the first channel control element belongs;

a first search space determining unit, configured to determine a search space according to the frequency domain resource and an aggregation level of the first physical downlink control channel; and

a first channel control element determining unit, configured to determine the first channel control element in the search space according to the number of the first channel control element.

Yet another aspect of the embodiments of the present invention provides a base station, including:

a configuring unit, configured to configure for each terminal, a frequency domain resource that supports transmission of a first physical downlink control channel;

a second number determining unit, configured to determine a number of a first channel control element corresponding to each terminal according to the frequency domain resource corresponding to each terminal and a position of the first channel control element in a resource block RB;

a second search space determining unit, configured to determine a search space of each terminal according to the frequency domain resource corresponding to each terminal and an aggregation level of the first physical downlink control channel; and

a second channel control element determining unit, configured to determine the first channel control element in the search space of each terminal according to the number of the first channel control element.

The embodiments of the present invention have the following technical effects: According to a frequency domain resource that is configured for a terminal by a base station and supports transmission of a first physical downlink control channel and a position of a first channel control element in an RB to which the first channel control element belongs, a number of the first channel control element is determined; then according to the frequency domain resource configured by the base station and an aggregation level, a search space corresponding to the terminal is determined; and then according to the number of the first channel control element, the first channel control element in the search space is determined. The embodiments implement detection of a first physical downlink control channel such as an E-PDCCH or an R-PDCCH in the search space determined by the present invention.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a schematic diagram of resources of an OFDM system in the prior art;
FIG. 2 is a flowchart of Embodiment 1 of a channel searching method according to the present invention;
FIG. 3 is a flowchart of Embodiment 2 of a channel searching method according to the present invention;
FIG. 4 is a flowchart of Embodiment 3 of a channel searching method according to the present invention;
FIG. 5 is an example of a bitmap of resource allocation type 0 in Embodiment 3 of a channel searching method according to the present invention;
FIG. 6 is an example of a bitmap of resource allocation type 1 in Embodiment 3 of a channel searching method according to the present invention;
FIG. 7 is a schematic diagram of a numbering manner of E-CCEs in Embodiment 3 of a channel searching method according to the present invention;
FIG. 8 is a flowchart of Embodiment 4 of a channel searching method according to the present invention;
FIG. 9 is a schematic diagram of a numbering manner of E-CCEs in Embodiment 4 of a channel searching method according to the present invention;
FIG. 10 is a flowchart of Embodiment 5 of a channel searching method according to the present invention;
FIG. 11 is a schematic diagram of a numbering manner of E-CCEs in Embodiment 5 of a channel searching method according to the present invention;
FIG. 12 is a schematic structural diagram of Embodiment 1 of a terminal according to the present invention;
FIG. 13 is a schematic structural diagram of Embodiment 2 of a terminal according to the present invention;
FIG. 14 is a schematic structural diagram of Embodiment 1 of a base station according to the present invention;
FIG. 15 is a schematic structural diagram of Embodiment 2 of a base station according to the present invention;
FIG. 16 is a flowchart of Embodiment 6 of a channel searching method according to the present invention; and
FIG. 17 is a schematic diagram of a numbering manner of E-CCEs in Embodiment 6 of a channel searching method according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

FIG. 2 is a flowchart of Embodiment 1 of a channel searching method according to the present invention. As shown in FIG. 2, this embodiment provides a channel searching method. This embodiment describes the technical solution of the present invention from a terminal side and may specifically include the following steps:

Step 201: Determine a number of a first channel control element according to a frequency domain resource that is configured for a terminal by a base station and supports transmission of a first physical downlink control channel and a position of the first channel control element in a resource block RB to which the first channel control element belongs.

In this embodiment of the present invention, the frequency domain resource that is configured for the terminal by the base station and supports transmission of the first physical downlink control channel includes: a position of a frequency resource or a quantity of frequency resources and the like, and may specifically include at least one resource block or resource block number, a quantity of resource blocks, at least one resource block group or resource block group number, or a quantity of resource block groups. The resource block includes a physical resource block or a virtual resource block.

In this embodiment, the first physical downlink control channel may specifically be an E-PDCCH, an R-PDCCH, or another physical downlink control channel, the first channel control element may specifically be an enhanced control channel element (Enhanced Control Channel Element, hereinafter referred to as E-CCE) and the like, and the base station may specifically be an evolved Node B (evolved Node B, hereinafter referred to as eNB). This step is as follows: The terminal first determines the number of the first channel control element according to the frequency domain resource that is configured for the terminal by the base station and supports transmission of the first physical downlink control channel and the position of the first channel control element in the RB to which the first channel control element belongs. The frequency domain resource that is configured for the terminal by the base station and supports transmission of the first physical downlink control channel may be a resource block group (Resource Block Group, hereinafter referred to as RBG) or an RB configured by the base station, and the position of the first channel control element in the RB to which the first channel control element belongs may specifically be a position number of the first channel control element in the RB to which the first channel control element belongs, so as to determine the numbering manner of the first channel control element in this embodiment, thereby determining a number of each first channel control element.

Specifically, step 201 may specifically be as follows: The terminal determines the number of the first channel control element according to the position of the first channel control element in the RB to which the first channel control element belongs, a quantity of first channel control elements in the RB, and a position of the RB to which the first channel control element belongs, in a RB that is configured for the terminal by the base station and support transmission of the first physical downlink control channel. Alternatively, the terminal first performs block interleaving for a first number of an RB configured for the terminal by the base station, to obtain a second number of the RB corresponding to the first number of the RB; and then determines the number of the first channel control element according to the second number of the RB and the position of the first channel control element in the RB to which the first channel control element belongs.

Step 202: Determine a search space according to the frequency domain resource and an aggregation level of the first physical downlink control channel.

The purpose of this embodiment is to detect a valid first physical downlink control channel in the search space corresponding to the terminal, so as to acquire control information transmitted by the base station, so the search space corresponding to the terminal needs to be determined first. The search space corresponding to the terminal is formed by a group of first physical downlink control channel candidates. One first physical downlink control channel may occupy one, two, four, or eight first channel control elements, which is specifically determined by a configured aggregation level. Therefore, the process of determining the search space corresponding to the terminal is also a process of determining first channel control elements occupied by the first physical downlink control channel candidates. Herein an E-PDCCH is used as an example of the first physical downlink control channel. Table 1 below is a correspondence table between a search space $S^{(L)}$ and a quantity of E-PDCCH candidates.

**Table 1 Correspondence table between a search space and a quantity of E-PDCCH candidates**

| Search Space $S^{(L)}$ | | | Quantity of E-PDCCH Candidates $M^{(L)}$ |
|---|---|---|---|
| Type | Aggregation Level $L$ | Quantity of Occupied E-CCEs | |
| User-Specific Search Space | 1 | 6 | 6 |
| | 2 | 12 | 6 |
| | 4 | 8 | 2 |
| | 8 | 16 | 2 |
| Common Search Space | 4 | 16 | 4 |
| | 8 | 16 | 2 |

As can be seen from Table 1, an E-PDCCH may have four aggregation levels, that is, 1, 2, 4, and 8, and the aggregation level may indicate a quantity of E-CCEs occupied by the E-PDCCH. That is, if the aggregation level is 1, one E-PDCCH occupies one E-CCE, one E-PDCCH may be mapped to six E-PDCCH candidates, and therefore the search space corresponding to the aggregation level occupies six E-CCEs in total; if the aggregation level is 2, one E-PDCCH occupies two E-CCEs, one E-PDCCH may be mapped to six E-PDCCH candidates, and therefore the search space corresponding to the aggregation level occupies 12 E-CCEs in total. In this step, the terminal determines the search space according to the frequency domain resource that is configured for the terminal by the base station and supports transmission of the first physical downlink control channel and with reference to each aggregation level of the first physical downlink control channel.

Step 203: Determine the first channel control element in the search space according to the number of the first channel control element.

Specifically, this step is as follows: The terminal determines the first channel control element in the search space according to the number of the first channel control element determined in step 201, that is, the terminal determines number information of the first channel control element occupied by the first physical downlink control channel candidate in the search space corresponding to the terminal. Different aggregation levels correspond to different quantities of first physical downlink control channel candidates and therefore correspond to different first channel control elements. After the terminal, through the foregoing steps, determines the search space and acquires the first channel control element occupied by each first physical downlink control channel candidate in the search space, the terminal may detect, in the search space, a first physical downlink control channel on which the base station transmits downlink control information, thereby acquiring, from the detected first physical downlink control channel, the downlink control information transmitted by the base station.

In the channel searching method provided in this embodiment, according to a frequency domain resource that is configured for a terminal by a base station and supports transmission of a first physical downlink control channel and a position of a first channel control element in an RB to which the first channel control element belongs, a number of the first channel control element is determined; then according to the frequency domain resource configured by the base station and an aggregation level, a search space corresponding to the terminal is determined; and then according to the number of the first channel control element, the first channel control element in the search space is determined. This embodiment implements detection of a first physical downlink control channel such as an E-PDCCH or an R-PDCCH in the search space determined by the present invention.

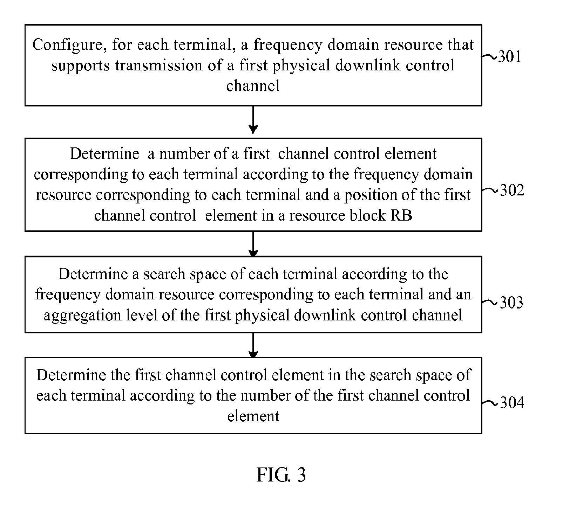

FIG. 3 is a flowchart of Embodiment 2 of a channel searching method according to the present invention. As shown in FIG. 3, this embodiment provides a channel searching method. This embodiment describes the technical solution of the present invention from a base station side and may specifically include the following steps:

Step 301: Configure, for each terminal, a frequency domain resource that supports transmission of a first physical downlink control channel.

Before a base station transmits downlink control information to each terminal, the base station first allocates a frequency domain resource that supports transmission of the first physical downlink control channel to each terminal, where the first physical downlink control channel may specifically be an E-PDCCH, an R-PDCCH, or another physical downlink control channel, and the frequency domain resource that is configured for the terminal by the base station and supports transmission of the first physical downlink control channel may be an RBG or an RB configured by the base station, that is, the base station configures several fixed RBGs or RBs to support transmission of the first physical downlink control channel.

Step 302: Determine a number of a first channel control element corresponding to each terminal according to the frequency domain resource corresponding to each terminal and a position of the first channel control element in a resource block RB.

Processing at base station side is similar to processing at the terminal side, and after configuring the frequency domain resource for the terminal, when the base station transmits the downlink control information to the terminal, the base station needs to first determine a search space corresponding to each terminal, so that the base station can put downlink control information corresponding to the terminal on a first physical downlink control channel in the search space corresponding to the terminal and transmit the information to the corresponding terminal. This step is as follows: The base station determines the number of the first channel control element corresponding to each terminal according to the frequency domain resource corresponding to each terminal and the position of the first channel control element in the RB, where the first channel control element may specifically be an E-CCE and the like, and the base station may specifically be an eNB. The base station determines a numbering manner of the first channel control element in this embodiment according to the frequency domain resource corresponding to the terminal and a numbering manner of the position of the first channel control element in the RB to which the first channel control element belongs, thereby determining the number of each first channel control element.

Step 303: Determine a search space of each terminal according to the frequency domain resource corresponding to each terminal and an aggregation level of the first physical downlink control channel.

This step is as follows: The base station determines the search space of each terminal according to the frequency domain resource such as an RBG or an RB that is configured for each terminal and supports transmission of the first physical downlink control channel, and according to different aggregation levels of the first physical downlink control channel, and in this step, the determining the search space of each terminal is determining number information of the first channel control element occupied by each first physical downlink control channel candidate.

Step 304: Determine the first channel control element in the search space of each terminal according to the number of the first channel control element.

This step is as follows: The base station determines, according to the number of the first channel control element which is determined in step 302, the first channel control element occupied by each first physical downlink control channel candidate in the search space of each terminal. Specifically, the step is as follows: With reference to the numbering manner of the first channel control element which is determined in step 302 and with reference to the number information of the first channel control element corresponding to the search space of each terminal which is determined in step 303, the first channel control element corresponding to the number information is acquired, thereby implementing a channel searching process on the base station side. After the base station determines the first channel control element occupied by each first physical downlink control channel candidate in the search space corresponding to each terminal, the base station may allocate and map the first physical downlink control channel corresponding to each terminal to the first physical downlink control channel in the determined search space. In this step, the first physical downlink control channel corresponding to the terminal is specifically a first physical downlink control channel used by the base station for transmitting downlink control information to the terminal, and the first physical downlink control channel is mapped to one or more first physical downlink control channels in the search space of the terminal, that is, the base station uses one or more first physical downlink control channels in the search space of the terminal, which is determined in the foregoing steps, to transmit the downlink control information of the terminal. Because the search space is formed by a group of first physical downlink control channel candidates, the first physical downlink control channel in the search space herein is a first physical downlink control channel candidate. After completing the mapping of the first physical downlink control channel, the base station may directly use the first physical downlink control channel in the search space of each terminal to transmit downlink control information to each terminal. After acquiring the frequency domain resource configured by the base station and related information, the terminal determines the search space by using a search space determining method similar to that of the base station side, so as to detect, in the search space, the first physical downlink control channel used by the base station, and acquire the downlink control information transmitted by the base station.

Specifically, this step may specifically be as follows: The base station determine the number of the first channel control element corresponding to each terminal according to the position of the first channel control element in the RB to which the first channel control element belongs, a quantity of first channel control elements in the RB, and a position of the RB to which the first channel control element belongs, in a RB corresponding to each terminal. Alternatively, the base station may also perform block interleaving for a first number of an RB configured for each terminal, to obtain a second number of the RB that corresponds to each terminal and corresponds to the first number of the RB; then determine the number of the first channel control element corresponding to each terminal according to the second number of the RB corresponding to each terminal and the position of the first channel control element in the RB to which the first channel control element belongs.

In the channel searching method provided in this embodiment, a frequency domain resource that supports transmission of a first physical downlink control channel is configured for each terminal; according to the frequency domain resource corresponding to each terminal and a position of a first channel control element in an RB, a number of the first channel control element corresponding to each terminal is determined; then according to the frequency domain resource corresponding to each terminal and an aggregation level, a search space corresponding to each terminal is determined; and according to the number of the first channel control element, the first channel control element in the search space corresponding to each terminal is determined. This embodiment implements detection of a first physical downlink control channel such as an E-PDCCH or an R-PDCCH in the search space determined by the present invention.

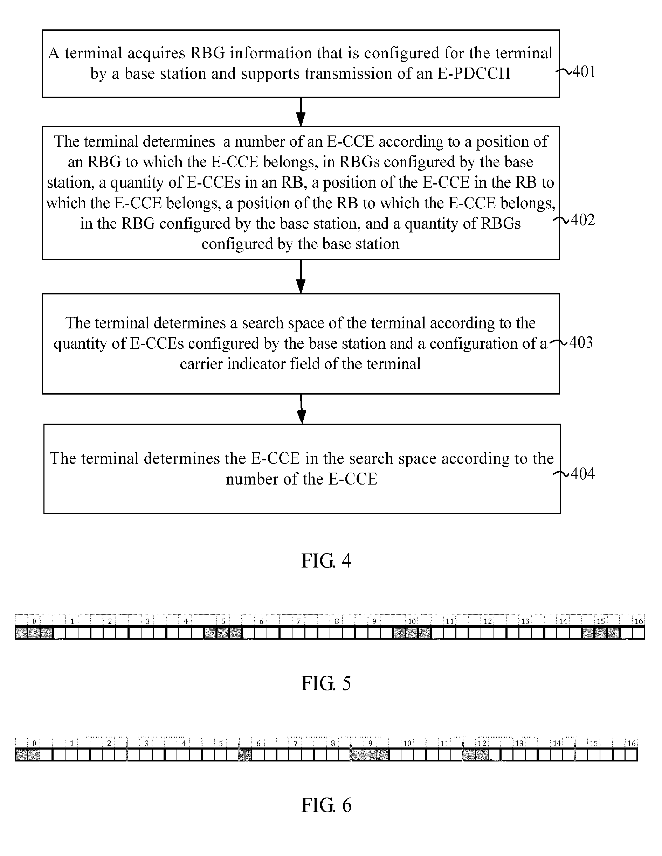

FIG. 4 is a flowchart of Embodiment 3 of a channel searching method according to the present invention. As shown in FIG. 4, this embodiment provides a channel searching method. In this embodiment, an E-PDCCH is specifically used as an example of a first physical downlink control channel for description, and an E-CCE is specifically used as an example of a first channel control element for description. This embodiment may specifically include the following steps:

Step 401: A terminal acquires RBG information that is configured for the terminal by a base station and supports transmission of an E-PDCCH.

When an eNB transmits service data to a terminal through a physical downlink shared channel (Physical Downlink Shared Channel, hereinafter referred to as PDSCH), resource allocation types of the PDSCH include resource allocation type 0 (Resource allocation type 0), resource allocation type 1 (Resource allocation type 1), and resource allocation type 2 (Resource allocation type 2), where resource allocation type 0 and resource allocation type 1 allocate resources in a form of an RBG, and resource allocation type 2 allocates resources in a form of an RB, which may specifically be a distributed virtual resource block (Distributed Virtual Resource Block, hereinafter referred to as DVRB) or a localized virtual resource block (Localized Virtual Resource Block, hereinafter referred to as LVRB). In this embodiment, the technical solution of the present invention is introduced by using resource allocation type 0 as an example of the resource allocation type, where the resource allocation type may include but is not limited to resource allocation type 0 and resource allocation type 1. FIG. 5 is an example of a bitmap of resource allocation type 0 in Embodiment 3 of a channel searching method according to the present invention. As shown in FIG. 5, in terms of resource allocation type 0, a bitmap manner is used to describe that an eNB allocates one or more RBGs to a terminal. If it is assumed that a system in FIG. 5 includes 50 RBs in total, and that one RBG includes three RBs, the system includes 17 RBGs in total, which are indicated in FIG. 5 as 0, 1, 2, ..., 16, where the last RBG includes two RBs. Assuming that the eNB allocates 17 bits of RBGs to the terminal, as shown in shadow parts in FIG. 5, the eNB allocates RBG0, RBG5, RBG10, and RBG15 to the terminal. FIG. 6 is an example of a bitmap of resource allocation type 1 in Embodiment 3 of a channel searching method according to the present invention. As shown in FIG. 6, in terms of resource allocation type 1, if it is still assumed that a system in FIG. 6 includes 50 RBs in total, and that one RBG includes three RBs, the system includes 17 RBGs in total, which are indicated in FIG. 6 as 0, 1, 2, ..., 16, where the last RBG includes two RBs. The RBGs in FIG. 6 are grouped into three subsets, which are an RBG subset {0, 3, 6, 9, 12, 15}, an RBG subset {1, 4, 7, 10, 13, 16}, and an RBG subset {2, 5, 8, 11, 14, 16}. Two bits maybe first used to indicate which RBG subset is chosen, then one bit is used to indicate whether to choose RBs from left to right or from right to left, and then 14 bits are used to indicate which RBs are allocated to the terminal. In FIG. 6, as shown in shadow parts, RBs numbered 0, 1, 18, 27, 28, 29, 36, and 37 are allocated to the terminal.

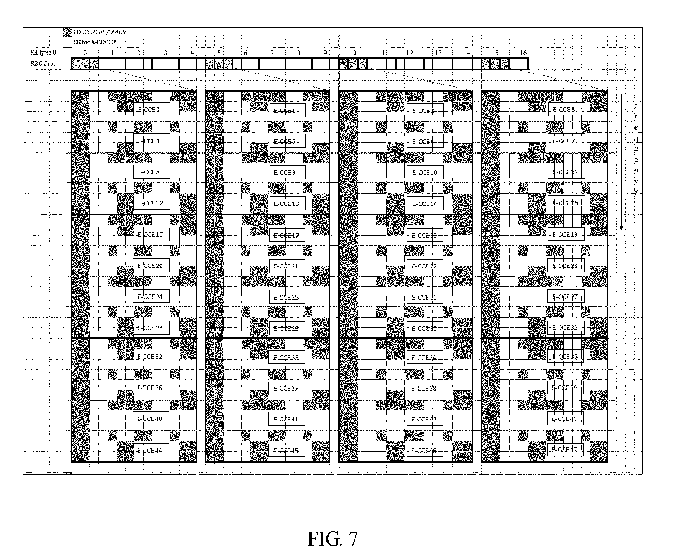

This step is as follows: The terminal acquires RBG information that is configured for the terminal by the eNB and supports transmission of the E-PDCCH. Assuming that the eNB configures for the terminal four RBGs, which are RBG0, RBG5, RBG10, and RBG15, these four RBGs are used as a user-specific search space of the E-PDCCH. FIG. 7 is a schematic diagram of a numbering manner of E-CCEs in Embodiment 3 of a channel searching method according to the present invention. As shown in FIG. 7, this embodiment uses a case of 50-RB system bandwidth as an example, where each RBG includes three RBs. This embodiment may include various cases of system bandwidth and cases of RBG size corresponding to the various cases of system bandwidth, which is not further described herein. The following diagram illustrates a case where one RB includes four E-CCEs. This embodiment may include cases where one RB includes four, three, or two E-CCEs, which is not further described herein.

Step 402: The terminal determines a number of an E-CCE according to a position of an RBG to which the E-CCE belongs, in RBGs configured by the base station, a quantity of E-CCEs in an RB, a position of the E-CCE in the RB to which the E-CCE belongs, a position of the RB to which the E-CCE belongs, in the RBG configured by the base station, and a quantity of RBGs configured by the base station.

In this embodiment, when an E-CCE is numbered, the number of the E-CCE may be set to increase as a number of an RBG increases, that is, a resource position number of a first E-CCE in a first RB in a first RBG is 0, a resource position number of a first E-CCE in a first RB in a second RBG is 1, a resource position number of a first E-CCE in a first RB in a third RBG is 2, and a resource position number of a first E-CCE in a first RB in a fourth RBG is 3. Then numbering is performed according to a position of an E-CCE in an RB, that is, the number of an E-CCE increases as the source position number of the E-CCE in an RB increases. Therefore, a resource position number of a second E-CCE in the first RB in the first RBG is 4, a resource position number of a second E-CCE in the first RB in the second RBG is 5, a resource position number of a second E-CCE in the first RB in the third RBG is 6, and a resource position number of a second E-CCE in the first RB in the fourth RBG is 7, and so on. Then numbering is performed according to a position of an RB in an RBG, that is, the number of an E-CCE further increases as the number of an RB in an RBG increases. Therefore, a resource position number of a first E-CCE in a second RB in the first RBG is 16, a resource position number of a first E-CCE in a second RB in the second RBG is 17, a resource position number of a first E-CCE in a second RB in the third RBG is 18, and a resource position number of a first E-CCE in a second RB in the fourth RBG is 19. It can be seen that the terminal may use the following formula (1) to determine the number of each E-CCE, that is, the numbering manner of the E-CCE may be represented by the following formula:

$$n_{E-CCE} = (m_{RBG} + n_{E-CCE}^{RB} \cdot N_{RBG} + m_{RB} \cdot N_{RBG} \cdot M_{E-CCE}) \qquad (1)$$

where, $n_{E-CCE}$ represents the number of the E-CCE, from 0 to $N_{E-CCE}-1$, where $N_{E-CCE}$ represents a total quantity of E-CCEs; $m_{RBG}$ represents a position number of the RBG to which the E-CCE belongs, in the RBGs that are configured for the terminal by the base station and support transmission of the E-PDCCH, from 0 to $N_{RBG}-1$; $n_{E-CCE}^{RB}$ represents a position number of the E-CCE in the RB to which the E-CCE belongs, from 0 to $M_{E-CCE}-1$; $m_{RB}$ represents a position number of the RB to which the E-CCE belongs, in the RBG, from 0 to P-1, where P represents a quantity of RBs in the RBG; $N_{RBG}$ represents a quantity of RBGs that are configured for the terminal by the base station and support transmission of the E-PDCCH; and $M_{E-CCE}$ represents the quantity of E-CCEs in the RB.

Alternatively, numbering is first performed according to a position of an RB in an RBG, that is, the number of an E-CCE increases as the resource position number of an RB in an RBG increases. Therefore, the resource position number of the first E-CCE in the second RB in the first RBG is 4, the resource position number of the first E-CCE in the second RB in the second RBG is 5, the resource position number of the first E-CCE in the second RB in the third RBG is 6, and the resource position number of the first E-CCE in the second RB in the fourth RBG is 7, and so on. Then numbering is performed according to a resource position number of an E-CCE in an RB, that is, the number of an E-CCE increases as the resource position number of the E-CCE in an RB increases. Therefore, the resource position number of the second E-CCE in the first RB in the first RBG is 13, the resource position number of the second E-CCE in the first RB in the second RBG is 14, the resource position number of the second E-CCE in the first RB in the third RBG is 15, and the resource position number of the second E-CCE in the first RB in the fourth RBG is 16. It can be seen that the terminal may use the following formula (2) to determine the number of each E-CCE, that is, the numbering manner of the E-CCE may be represented by the following formula:

$$n_{E-CCE} = (m_{RBG} + m_{RB} \cdot N_{RBG} + n_{E-CCE}^{RB} \cdot N_{RBG} \cdot P) \qquad (2)$$

where, $n_{E-CCE}$ represents the number of the E-CCE, from 0 to $N_{E-CCE}-1$, where $N_{E-CCE}$ represents a total quantity of E-CCEs; $m_{RBG}$ represents a position number of the RBG to which the E-CCE belongs, in the RBGs that are configured for the terminal by the base station and support transmission of the E-PDCCH, from 0 to $N_{RBG}-1$; $n_{E-CCE}^{VRB}$ represents a position number of the E-CCE in the RB to which the E-CCE belongs, from 0 to $M_{E-CCE}-1$; $m_{RB}$ represents a position number of the RB to which the E-CCE belongs, in the RBG, from 0 to P-1; $N_{RBG}$ represents a quantity of RBGs that are configured for the terminal by the base station and support transmission of the E-PDCCH; and P represents the quantity of RBs in the RBG.

Step 403: The terminal determines a search space of the terminal according to the quantity of E-CCEs configured by the base station and a configuration of a carrier indicator field of the terminal.

After determining the number of each E-CCE through the foregoing steps, that is, determining the numbering manner of the E-CCE, the terminal may determine the search space of the terminal according to the quantity of E-CCEs configured for the terminal by the eNB and the configuration of the carrier indicator field of the terminal. If the number of the E-CCE determined by the terminal is represented by using the above formula (1), the terminal in this step may use the following formula (3) to determine the search space:

$$S^L = (Y + m' + i \cdot N_{RBG}) \bmod N_{E-CCE} \tag{3}$$

where, $S^{(L)}$ represents a set of numbers of the E-CCEs which correspond to a search space corresponding to a determined aggregation level L, Y represents a start position for searching, and $N_{E-CCE}$ represents a quantity of E-CCEs that are configured for the terminal by the base station and support transmission of the first physical downlink control channel, where $i = 0, \cdots, L$-1 ; when the terminal is configured with a carrier indicator field, $m' = m + M^{(L)} \cdot n_{CI}$, where $n_{CI}$ is a value of the carrier indicator field, and when the terminal is not configured with a carrier indicator field, $m¢ = m$, where $m = 0, \cdots, M^{(L)}$-1, and $M^{(L)}$ is a quantity of E-PDCCH candidates in the search space corresponding to the aggregation level L.

If the number of the E-CCE determined by the terminal is represented by using the above formula (2), the terminal in this step may use the following formula (4) to determine the search space:

$$S^L = \{L \cdot (Y + m') \bmod \lfloor N_{E-CCE} / L \rfloor + i \cdot N_{RBG}\} \bmod N_{E-CCE} \tag{4}$$

where, $S^{(L)}$ represents a set of numbers of the E-CCEs which correspond to a search space corresponding to a determined aggregation level L, Y represents a start position for searching, and $N_{E-CCE}$ represents a quantity of E-CCEs that are configured for the terminal by the base station and support transmission of the E-PDCCH, where $i = 0, \cdots, L$-1; when the terminal is configured with a carrier indicator field, $m' = m + M^{(L)} \cdot n_{CI}$, where $n_{CI}$ is a value of the carrier indicator field, and when the terminal is not configured with a carrier indicator field, $m¢ = m$, where $m = 0, \cdots, M^{(L)}$ -1, and $M^{(L)}$ is a quantity of E-PDCCH candidates in the search space corresponding to the aggregation level L.

Step 404: The terminal determines the E-CCE in the search space according to the number of the E-CCE.

After determining the search space through the foregoing steps, the terminal specifically acquires the E-CCE in the search space according to the previously determined number of the E-CCE and the determined search space, that is, the terminal acquires an E-CCE corresponding to each number. Then, the terminal may detect, in the search space, an E-PDCCH on which the base station transmits downlink control information, thereby acquiring, from the detected E-PDCCH, the downlink control information transmitted by the base station.

In the channel searching method provided in this embodiment, according to a frequency domain resource that is configured for a terminal by a base station and supports transmission of an E-PDCCH, and a position of an E-CCE in an RB to which the E-CCE belongs, a number of the E-CCE is determined; and then according to the frequency domain resource configured by the base station and an aggregation level, a search space corresponding to the terminal is determined; and then according to the number of the E-CCE, the E-CCE in the search space is determined. This embodiment implements detection of a first physical downlink control channel such as an E-PDCCH or an R-PDCCH in a predefined search space; this embodiment can distribute E-PDCCHs at different aggregation levels into different RBGs as far as possible, so that an eNB can schedule, according to channel information fed back by a terminal, the E-PDCCH to an E-CCE set in an RB with a better channel for transmission.

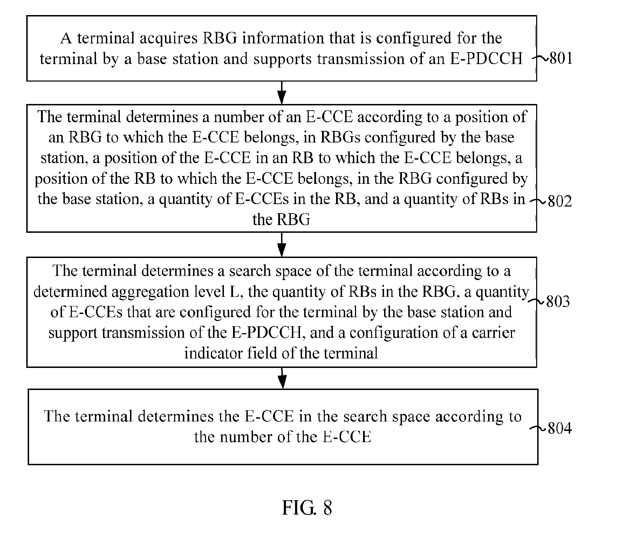

FIG. 8 is a flowchart of Embodiment 4 of a channel searching method according to the present invention. As shown in FIG. 8, this embodiment provides a channel searching method and may specifically include the following steps:

Step 801: A terminal acquires RBG information that is configured for the terminal by a base station and supports transmission of an E-PDCCH.

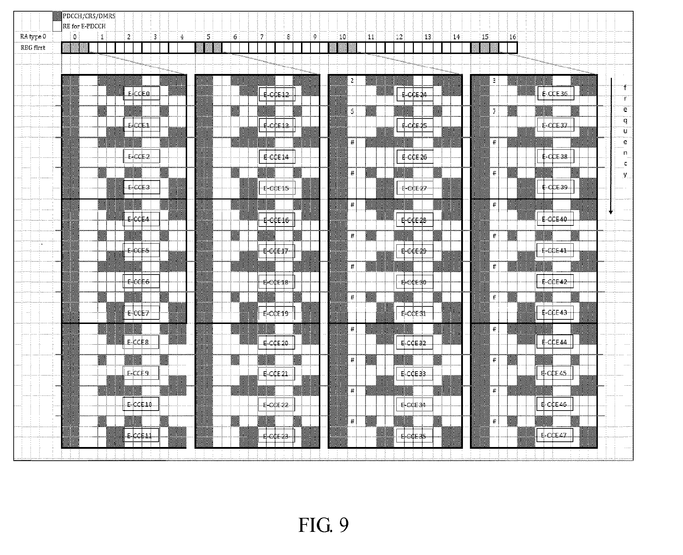

This step is as follows: A terminal acquires RBG information that is configured for the terminal by an eNB and supports transmission of an E-PDCCH. In this embodiment, the technical solution of the present invention is introduced by using resource allocation type 0 as an example of a resource allocation type, where the resource allocation type may include but is not limited to resource allocation type 0 and resource allocation type 1. Assuming that the eNB configures for the terminal four RBGs, which are RBG0, RBG5, RBG10, and RBG15, these four RBGs are used as a user-specific search space of the E-PDCCH. FIG. 9 is a schematic diagram of a numbering manner of E-CCEs in Embodiment 4 of a channel searching method according to the present invention. As shown in FIG. 9, this embodiment uses a case of 50-RB system bandwidth as an example, where each RBG includes three RBs. This embodiment may include various cases of system bandwidth and cases of RBG size corresponding to the various cases of system bandwidth, which is not further described herein. FIG. 9 illustrates a case where one RB includes four E-CCEs. This embodiment may include cases where one RB includes four, three, or two E-CCEs, which is not further described herein.

Step 802: The terminal determines a number of an E-CCE according to a position of an RBG to which the E-CCE belongs, in RBGs configured by the base station, a position of the E-CCE in an RB to which the E-CCE belongs, a position of the RB to which the E-CCE belongs, in the RBG configured by the base station, a quantity of E-CCEs in the RB, and a quantity of RBs in the RBG.

In this embodiment, when the E-CCE is numbered, the number of the E-CCE may be set to increase as frequency increases, that is, a resource position number of a first E-CCE in a first RB in a first RBG is 0, a resource position number of a second E-CCE in a first RB in a first RBG is 1, a resource position number of a first E-CCE in a first RB in a second RBG is 12, a resource position number of a first E-CCE in a first RB in a third RBG is 24, a resource position number of a first E-CCE in a first RB in a fourth RBG is 36, and so on. It can be seen that the terminal may use the following formula (5) to determine a number of each E-CCE, that is, a numbering manner of the E-CCE may be represented by the following formula:

$$n_{E-CCE} = (m_{RBG} \cdot P \cdot M_{E-CCE} + m_{RB} \cdot M_{E-CCE} + n_{E-CCE}^{RB}) \qquad (5)$$

where, $n_{E-CCE}$ represents the number of the E-CCE, from 0 to $N_{E-CCE}$ -1, where $N_{E-CCE}$ represents a total quantity of E-CCEs; $m_{RBG}$ represents a position number of the RBG to which the E-CCE belongs, in the RBGs that are configured for the terminal by the base station and support transmission of the E-PDCCH, from 0 to $N_{RBG}$-1; $n_{E-CCE}^{RB}$ represents a position number of the E-CCE in the RB to which the E-CCE belongs, from 0 to $M_{E-CCE}$ -1; $m_{RB}$ represents a position number of the RB to which the E-CCE belongs, in the RBG, from 0 to P-1; $M_{E-CCE}$ represents the quantity of E-CCEs in the RB; and P represents the quantity of RBs in the RBG.

Step 803: The terminal determines a search space of the terminal according to a determined aggregation level L, the quantity of RBs in the RBG, the quantity of E-CCEs that are configured for the terminal by the base station and support transmission of the E-PDCCH, and a configuration of a carrier indicator field of the terminal.

After determining the number of each E-CCE through the foregoing steps, that is, determining the numbering manner of the E-CCE, the terminal may determine the search space of the terminal according to the determined aggregation level L, the quantity of RBs in the RBG, the quantity of E-CCEs that are configured for the terminal by the base station and support transmission of the E-PDCCH, and the configuration of the carrier indicator field of the terminal. In this step, the terminal may use the following formula (6) to determine the search space:

$$S^{(L)} = L \cdot \left\{ (Y + m' \cdot P \cdot M_{E\text{-}CCE} / L) \bmod \lfloor N_{E\text{-}CCE} / L \rfloor \right\} + i \qquad (6)$$

where, $S^{(L)}$ represents a set of numbers of the E-CCEs which correspond to the search space corresponding to the determined aggregation level L, Y represents a start position for searching, and $N_{E-CCE}$ represents the quantity of E-CCEs that are configured for the terminal by the base station and support transmission of the E-PDCCH, where $i = 0$, $\cdots$, $L$-1; when the terminal is configured with a carrier indicator field, $m' = m + M^{(L)} \cdot n_{CI}$, where $n_{CI}$ is a value of the carrier indicator field, and when the terminal is not configured with a carrier indicator field, $m' = m$, where $m = 0$, $\cdots$, $M^{(L)}$-1, and $M^{(L)}$ is a quantity of E-PDCCH candidates in the search space corresponding to the aggregation level L.

Step 804: The terminal determines the E-CCE in the search space according to the number of the E-CCE.

After determining the search space through the foregoing steps, the terminal specifically acquires the E-CCE in the search space according to the previously determined number of the E-CCE and the determined search space, that is, the terminal acquires the E-CCE corresponding to each number. Then, the terminal may detect, in the search space, an E-PDCCH on which the base station transmits downlink control information, thereby acquiring, from the detected E-PDCCH, the downlink control information transmitted by the base station.

In the channel searching method provided in this embodiment, according to a frequency domain resource that is configured for a terminal by a base station and supports transmission of an E-PDCCH, and a position of an E-CCE in an RB to which the E-CCE belongs, a number of the E-CCE is determined; and then according to the frequency domain resource configured by the base station and an aggregation level, a search space corresponding to the terminal is determined; and then according to the number of the E-CCE, the E-CCE in the search space is determined. This embodiment implements detection of a first physical downlink control channel such as an E-PDCCH or an R-PDCCH in a predefined search space; this embodiment can distribute E-PDCCHs at different aggregation levels into different RBGs as far as possible, so that an eNB can schedule, according to channel information fed back by a terminal, the E-PDCCH to an E-CCE set in an RB with a better channel for transmission.

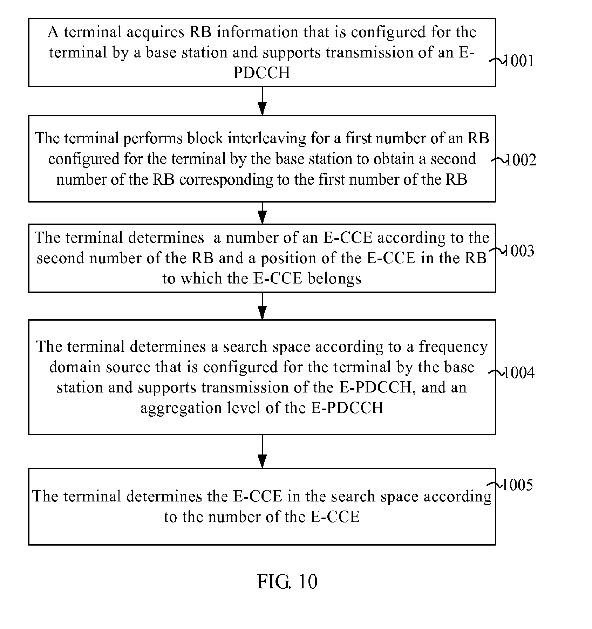

FIG. 10 is a flowchart of Embodiment 5 of a channel searching method according to the present invention. As shown in FIG. 10, this embodiment provides a channel searching method and may specifically include the following steps:

Step 1001: A terminal acquires RB information that is configured for the terminal by a base station and supports transmission of an E-PDCCH.

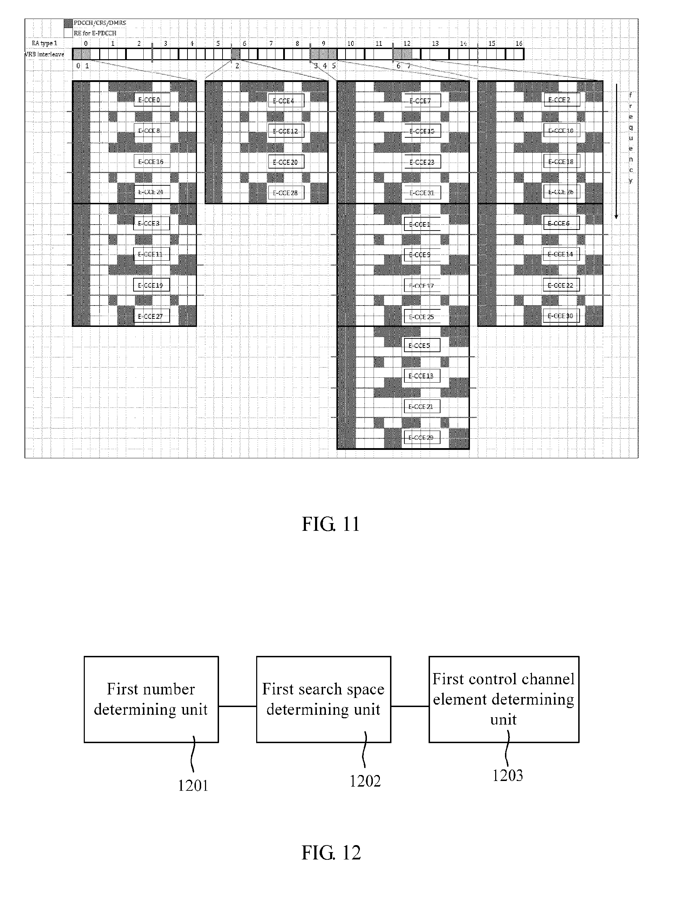

This step is as follows: A terminal acquires RB information that is configured for the terminal by an eNB and supports transmission of an E-PDCCH. In this embodiment, the technical solution of the present invention is introduced by using resource allocation type 1 as an example of a resource allocation type, where the resource allocation type may include but is not limited to resource allocation type 0 and resource allocation type 1. Assuming that the eNB configures for the terminal eight RBs, where the RBs may specifically be virtual resource blocks, which are resource blocks whose number $n_{RB}$ is 0, 1, 18, 27, 28, 29, 36, and 37 respectively, these eight RBs are used as a user-specific search space of the E-PDCCH. FIG. 11 is a schematic diagram of a numbering manner of E-CCEs in Embodiment 5 of a channel searching method according to the present invention. As shown in FIG. 11, this embodiment uses a case of 50-RB system bandwidth as an example, where each RBG includes three RBs. This embodiment may include various cases of system bandwidth and cases of RBG size corresponding to the various cases of system bandwidth, which is not further described herein. FIG. 11 illustrates a case where one RB includes four E-CCEs. This embodiment may include cases where one RB includes four, three, or two E-CCEs, which is not further described herein.

Step 1002: The terminal performs block interleaving for a first number of an RB configured for the terminal by the base station, to obtain a second number of the RB corresponding to the first number of the RB.

In this embodiment, the number $n_{RB}$, which is acquired through the foregoing step, of the RB configured for the terminal by the base station may be renumbered, that is, the number $n_{RB}$ is specifically the first number of the RB. This step may respectively map first numbers 0, 1, 18, 27, 28, 29, 36, and 37, of the RBs configured by the base station, to first numbers of the RBs $n_{RB}^{E\text{-PDCCH}}$ : 0, 1, 2, 3, 4, 5, 6, and 7. This step performs block interleaving for the first number of the RB $n_{RB}^{E\text{-PDCCH}}$ to obtain the second number of the RB corresponding to the first number of the RB, where the purpose of performing block interleaving for the first number of the RB is to scatter the RBs configured for the terminal by the base station, so as to allocate the RBs to different RBGs. Specifically, in this embodiment, an interleaver, which is used to perform block interleaving for the first number of the RB, is introduced as follows, and actual applications include but are not limited to the following two interleaving modes.

For example, a first interleaving mode may adopt a block interleaving matrix, whose quantity of columns $N_{colume}$ is 3 and quantity of rows $N_{row} = \left\lceil N_{RB}^{E-PDCCH} / 3 \right\rceil$, as the interleaver. $n_{RB}^{E\text{-PDCCH}}$ is written into the block interleaving matrix according to a row-first manner, and $3N_{row} - N_{RB}^{E-PDCCH}$ positions in the last row are filled with null (Null), and then values are read according to a column-first manner, where if null is read, it is skipped, and finally second numbers of the RBs $q_{RB}$ 0, 3, 6, 1, 4, 7, 2, and 5 are obtained, which respectively form a mapping relationship with the first numbers of the RBs $n_{RB}^{E\text{-PDCCH}}$ 0, 1, 2, 3, 4, 5, 6, and 7.

Alternatively, a second interleaving mode may be setting a quantity of rows of the block interleaving matrix to $N_{row} = \lceil N_{RB} /(4P) \rceil \cdot P$, and a quantity of columns of the block interleaving matrix to $N_{colume}$, where the quantity of columns may be set to 4, and the first number of the RB $n_{RB}^{E\text{-PDCCH}}$ is written into the block interleaving matrix according to a row-first manner. Positions in column $n_1$ and column $n_2$ in m last rows of the block interleaving matrix are written with null, where $m = 2(4N_{row} - N_{RB}^{E\text{-}PDCCH})$, and $N_{RB}^{E\text{-}PDCCH}$ represents a quantity of RBs that are configured for the terminal by the base station and support transmission of the E-PDCCH; where $n_1$ and $n_2$ may be preset positive integers smaller than or equal to $N_{colume}$. For example, m positions in the second column and the fourth column in the last $(4N_{row} - N_{RB}^{E\text{-}PDCCH})$ rows are set to null (Null), then non-null values are read from the block interleaving matrix according to a column-first manner, and the second numbers of the RBs $q_{RB}$ 0, 4, 6, 1, 2, 5, 7, and 3 are obtained, which correspond to the first numbers of the RBs $n_{RB}^{E\text{-PDCCH}}$ on a one-to-one basis. This interleaving mode may specifically be represented by using the following formula (7):

$$q_{RB} = \begin{cases} \widetilde{n}'_{RB} - N_{row} & , N_{null} \neq 0 \quad \text{and} \quad n_{RB}^{E-PDCCH} \geq N_{RB} - N_{null} \quad \text{and} \quad n_{RB}^{E-PDCCH} \bmod 2 = 1 \\ \widetilde{n}'_{RB} - N_{row} + N_{null}/2 & , N_{null} \neq 0 \quad \text{and} \quad n_{RB}^{E-PDCCH} \geq N_{RB} - N_{null} \quad \text{and} \quad n_{RB}^{E-PDCCH} \bmod 2 = 0 \\ \widetilde{n}''_{RB} - N_{null}/2 & , N_{null} \neq 0 \quad \text{and} \quad n_{RB}^{E-PDCCH} < N_{RB} - N_{null} \quad \text{and} \quad n_{RB}^{E-PDCCH} \bmod 4 \geq 2 \\ \widetilde{n}''_{RB} & , \text{otherwise} \end{cases} \tag{7}$$

where,
$$\widetilde{n}'_{RB} = 2N_{row} \cdot \left( n_{RB}^{E-PDCCH} \bmod 2 \right) + \left\lfloor n_{RB}^{E-PDCCH}/2 \right\rfloor \quad \text{and}$$

$$\widetilde{n}''_{RB} = N_{row} \cdot \left( n_{RB}^{E-PDCCH} \bmod 4 \right) + \left\lfloor n_{RB}^{E-PDCCH}/4 \right\rfloor.$$

Step 1003: The terminal determines a number of an E-CCE according to the second number of the RB and a position of the E-CCE in an RB to which the E-CCE belongs.

After determining the second number of the RB $q_{RB}$ through the foregoing steps, the terminal may determine the number of the E-CCE according to the second number of the RB and the position of the E-CCE in the RB to which the E-CCE belongs. Specifically, the following formula (8) may be used to determine the number of the E-CCE:

$$n_{E-CCE} = q_{RB} + n_{E-CCE}^{RB} \cdot N_{RB} \tag{8}$$

where, $n_{E-CCE}^{RB}$ represents a position number of the E-CCE in the RB that is configured for the terminal by the base station and supports transmission of the E-PDCCH, from 0 to $M_{E-CCE}$-1, where $M_{E-CCE}$ represents a quantity of E-CCEs in the RB, $N_{RB}$ represents a quantity of RBs, and $q_{RB}$ represents the second number of the RB.

Step 1004: The terminal determines a search space according to a frequency domain source that is configured for the terminal by the base station and supports transmission of the E-PDCCH, and an aggregation level of the E-PDCCH.

After determining the number of each E-CCE through the foregoing steps, that is, determining a numbering manner of the E-CCE, the terminal may determine the search space according to the frequency domain source that is configured for the terminal by the base station and supports transmission of the E-PDCCH, and the aggregation level of the E-PDCCH, that is, the terminal may use the following formula (9) to determine the search space:

$$S^{L} = \left\{ L \cdot (Y + m') \bmod \left\lfloor N_{E-CCE}/L \right\rfloor + i \cdot N_{RB} \right\} \bmod N_{E-CCE} \tag{9}$$

where, $S^{(L)}$ represents a set of numbers of the E-CCEs which correspond to the search space corresponding to the determined aggregation level L, Y represents a start position for searching, and $N_{E-CCE}$ represents a quantity of E-CCEs that are configured for the terminal by the base station and support transmission of the E-PDCCH, where $i = 0, \cdots, L$-1; when the terminal is configured with a carrier indicator field, $m'=m+M^{(L)} \cdot n_{CI}$, where $n_{CI}$ is a value of the carrier indicator field, and when the terminal is not configured with a carrier indicator field, $m' = m$, where $m = 0, \cdots, M^{(L)}$-1, and $M^{(L)}$ is a quantity of E-PDCCH candidates in the search space corresponding to the aggregation level L.

Step 1005: The terminal determines the E-CCE in the search space according to the number of the E-CCE.

After determining the search space through the foregoing steps, the terminal specifically acquires the E-CCE in the search space according to the previously determined number of the E-CCE and the determined search space, that is, the terminal acquires the E-CCE corresponding to each number. Then, the terminal may detect, in the search space, an E-PDCCH on which the base station transmits downlink control information, thereby acquiring, from the detected E-PDCCH, the downlink control information transmitted by the base station.

In the channel searching method provided in this embodiment, according to a frequency domain resource that is configured for a terminal by a base station and supports transmission of an E-PDCCH, and a position of an E-CCE in an RB to which the E-CCE belongs, a number of the E-CCE is determined; then according to the frequency domain resource configured by the base station and an aggregation level, a search space corresponding to the terminal is determined; and then according to the number of the E-CCE, the E-CCE in the search space is determined. This embodiment implements detection of a first physical downlink control channel such as an E-PDCCH or an R-PDCCH in a predefined search space; this embodiment can distribute E-PDCCHs at different aggregation levels into different RBGs as far as possible, so that an eNB can schedule, according to channel information fed back by a terminal, the E-PDCCH to an E-CCE set in an RB with a better channel for transmission.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program codes, such as a ROM, a RAM, a magnetic disk, or an optical disc.

FIG. 12 is a schematic structural diagram of Embodiment 1 of a terminal according to the present invention. As shown in FIG. 12, this embodiment provides a terminal that may specifically execute the steps in the foregoing method Embodiment 1, which is not described herein again. The terminal provided in this embodiment may specifically include a first number determining unit 1201, a first search space determining unit 1202, and a first channel control element determining unit 1203. The first number determining unit 1201 is configured to determine a number of a first channel control element according to a frequency domain resource that is configured for the terminal by a base station and supports transmission of a first physical downlink control channel and a position of the first channel control element in a resource block RB to which the first channel control element belongs. The first search space determining unit 1202 is configured to determine a search space according to the frequency domain resource and an aggregation level of the first physical downlink control channel. The first channel control element determining unit 1203 is configured to determine the first channel control element in the search space according to the number of the first channel control element.

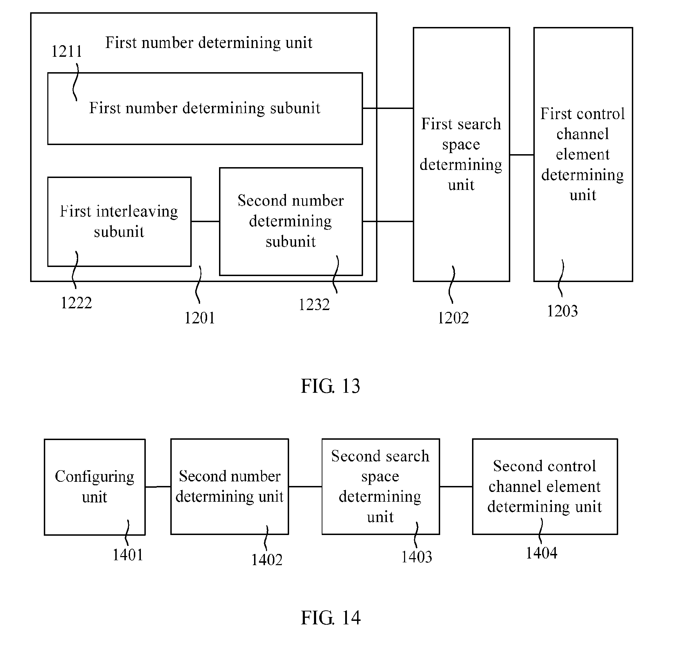

FIG. 13 is a schematic structural diagram of Embodiment 2 of a terminal according to the present invention. As shown in FIG. 13, this embodiment provides a terminal that may specifically execute the steps in the foregoing method Embodiment 3, Embodiment 4, or Embodiment 5, which is not described herein again. The terminal provided in this embodiment is based on FIG. 12, where a first number determining unit 1201 may specifically include a first number determining subunit 1211. The first number determining subunit 1211 is configured to determine a number of A first channel control element according to a position of the first channel control element in an RB to which the first channel control element belongs, a quantity of first channel control elements in the RB, and a position of the resource block RB to which the first channel control element belongs, in RBs that are configured for the terminal by a base station and support transmission of a first physical downlink control channel.

Alternatively, the first number determining unit 1201 may specifically include a first interleaving subunit 1222 and a second number determining subunit 1232. The first interleaving subunit 1222 is configured to perform block interleaving for a first number of an RB configured for the terminal by the base station, to obtain a second number of the RB corresponding to the first number of the RB. The second number determining subunit 1232 is configured to determine a number of the first channel control element according to the second number of the RB and a position of the first channel control element in the RB to which the first channel control element belongs.

Specifically, the first number determining subunit 1211 may use the above formula (1), (2), or (5) to determine the number of the first channel control element. The second number determining subunit 1232 may use the above formula (8) to determine the number.

More specifically, the first search space determining unit 1202 may specifically use the above formula (3), (4), (6), or (9) to determine the first channel control element corresponding to the search space.

With the terminal provided in this embodiment, according to a frequency domain resource that is configured for the terminal by a base station and supports transmission of an E-PDCCH, and a position of an E-CCE in an RB to which the E-CCE belongs, a number of the E-CCE is determined; then according to the frequency domain resource configured by the base station and an aggregation level, a search space corresponding to the terminal is determined; and then according to a number of a first channel control element, the first channel control element in the search space is determined. This embodiment implements detection of a first physical downlink control channel such as an E-PDCCH or an R-PDCCH in the search space determined by the present invention; this embodiment can distribute E-PDCCHs at different aggregation levels into different RBGs as far as possible, so that an eNB can schedule, according to channel information fed back by a terminal, the E-PDCCH to an E-CCE set in an RB with a better channel for transmission.

FIG. 14 is a schematic structural diagram of Embodiment 1 of a base station according to the present invention. As shown in FIG. 14, this embodiment provides a terminal that may specifically execute the steps in the foregoing method Embodiment 2, which is not described herein again. The terminal provided in this embodiment may specifically include a configuring unit 1401, a second number determining unit 1402, a second search space determining unit 1403, and a second channel control element determining unit 1404. The configuring unit 1401 is configured to configure for each terminal, a frequency domain resource that supports transmission of a first physical downlink control channel. The second number determining unit 1402 is configured to determine a number of a first channel control element corresponding to each terminal according to a frequency domain resource corresponding to each terminal and a position of a first channel control element in a resource block RB. The second search space determining unit 1403 is configured to determine a search space of each terminal according to the frequency domain resource corresponding to each terminal and an aggregation level of the first physical downlink control channel. The second channel control element determining unit 1404 is configured to determine the first channel control element in the search space of each terminal according to the number of the first channel control element.

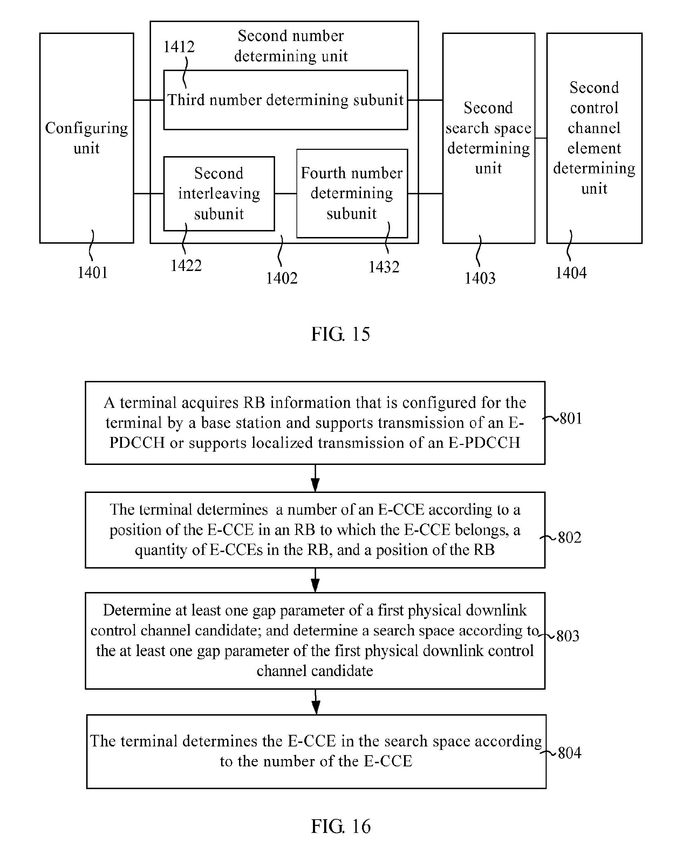

FIG. 15 is a schematic structural diagram of Embodiment 2 of a base station according to the present invention. As shown in FIG. 15, this embodiment provides a base station that may specifically execute the steps in the foregoing method Embodiment 3, Embodiment 4, or Embodiment 5, which is not described herein again. The base station provided in this embodiment is based on FIG. 14, where a second number determining unit 1402 may specifically include a third number determining subunit 1412. The third number determining subunit 1412 is configured to determine a number of a first channel control element corresponding to each terminal according to a position of the first channel control element in an RB to which the first channel control element belongs, a quantity of first channel control elements in the RB, and a position of the RB to which the first channel control element belongs, in RBs corresponding to each terminal.

Alternatively, the second number determining unit 1402 may specifically include a second interleaving subunit 1422 and a fourth number determining subunit 1432. The second interleaving subunit 1422 is configured to perform block interleaving for a first number of an RB configured for each terminal, to obtain a second number of the RB which corresponds to each terminal and corresponds to the first number of the RB. The fourth number determining subunit 1432 is configured to determine a number of the first channel control element corresponding to each terminal according to the second number of the RB corresponding to each terminal and the position of the first channel control element in the RB to which the first channel control element belongs.

With the base station provided in this embodiment, a frequency domain resource that supports transmission of a first physical downlink control channel is configured for each terminal; according to the frequency domain resource corresponding to each terminal and a position of a first channel control element in an RB, a number of the first channel control element corresponding to each terminal is determined; then according to the frequency domain resource corresponding to each terminal and an aggregation level, a search space corresponding to each terminal is determined; and according to the number of the first channel control element, the first channel control element in the search space corresponding to each terminal is determined. This embodiment implements detection of a first physical downlink control channel such as an E-PDCCH or an R-PDCCH in the search space determined by the present invention.

This embodiment further provides a channel searching system, which may specifically include the terminal shown in FIG. 12 or FIG. 13 and the base station shown in FIG. 14 or FIG. 15.

FIG. 16 is a flowchart of Embodiment 6 of a channel searching method according to the present invention. As shown in FIG. 16, this embodiment provides a channel searching method and may specifically include the following steps:

Step 1601: A terminal acquires RB information that is configured for the terminal by a base station and supports transmission of an E-PDCCH or supports localized transmission of an E-PDCCH.

This step is as follows: A terminal acquires RB information that is configured for the terminal by an eNB and supports transmission of an E-PDCCH or supports localized transmission of an E-PDCCH. Assuming that the eNB configures for the terminal four RBs, which are RB0, RB1, RB2, and RB3, these four RBs are used as a user-specific search space of the E-PDCCH.

Because a frequency domain resource may include one or more RBs, and an RB may include one or more E-CCEs, the frequency domain resource may include one or more E-CCEs.

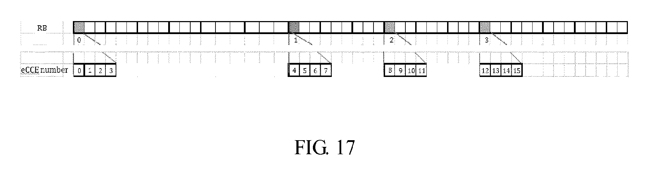

FIG. 17 is a schematic diagram of a numbering manner of E-CCEs in Embodiment 6 of a channel searching method according to the present invention. As shown in FIG. 17, FIG. 17 illustrates a case where one RB includes four E-CCEs. This embodiment may include cases where one RB includes four, three, or two E-CCEs, which is not further described herein.

Step 1602: The terminal determines a number of an E-CCE according to a position of the E-CCE in an RB to which the E-CCE belongs, a quantity of E-CCEs in the RB, and a position of the RB.

In this embodiment, when E-CCEs are numbered, the E-CCEs may be numbered in ascending order according position numbers of RBs (or may be numbered in descending order). That is, a resource position number of a first E-CCE in RB0 is 0, a resource position number of a second E-CCE in RB0 is 1, ..., a resource position number of a first E-CCE in RB1 is 4, ..., a resource position number of a first E-CCE in RB2 is 8, a resource position number of a first E-CCE in RB3 is 12, and so on. It can be seen that the terminal may use the following formula (10) to determine a number of each E-CCE, that is, a numbering manner of the E-CCE may be represented by the following formula:

$$n_{E-CCE} = \sum_{i=0}^{u-1} M_{E-CCE,i} + n_{E-CCE,u}^{RB} \qquad (10)$$

where, $n_{E-CCE}$ represents the number of the E-CCE, $n_{E-CCE,u}^{RB}$ represents a position number of the E-CCE in the RB to which the E-CCE belongs and whose position number is u, and $M_{E-CCE,i}$ represents a quantity of E-CCEs in an RB whose position number is i.

Step 1603: Determine at least one gap parameter of a search space; and determine the search space according to the at least one gap parameter of the search space, the frequency domain resource, and an aggregation level of a first physical downlink control channel.

The determining the at least one gap parameter of the search space includes: determining the at least one gap parameter of the search space according to a predefined value, for example, the predefined gap parameter is an integer value such as 2, 3, 4, 5, 6, 7, 8, or 9; or, determining the at least one gap parameter of the search space according to a configuration of the base station, for example, the base station configures at least one value for the gap parameter, where a value range is an integer value such as 2, 3, 4, 5, 6, 7, 8, or 9; or, calculating a second parameter of the gap parameter according to a configuration of the base station, and calculating and obtaining, by using the second parameter, the at least one gap parameter, for example, the second parameter of the gap parameter is an integer value such as 1, 2, 3, or 4, and the gap parameter is twice the second parameter, that is, the gap parameter is an integer value such as 2, 4, 6, or 8.

Further, the determining the at least one gap parameter of the search space includes: mapping a different aggregation level L to a different gap parameter. For example, aggregation level 1 corresponds to gap parameter $N_{gap,1}$, aggregation level 2 corresponds to gap parameter $N_{gap,2}$, and so on.

After determining the number of each E-CCE through the foregoing steps, that is, determining the numbering manner of the E-CCE, the terminal may determine the search space of the terminal according to the determined aggregation level L, the at least one gap parameter of the search space, the quantity of E-CCEs that are configured for the terminal by the base station and support transmission of the E-PDCCH, and a configuration of a carrier indicator field of the terminal. In this step, the terminal may use the following formula (11) to determine the search space:

$$S^{(L)} = \{L \cdot \left\{ (Y + m' \cdot N_{gap,L}) \bmod \left\lfloor N_{E\text{-CCE}} / L \right\rfloor \right\} + i\} \tag{11}$$

where, $S^{(L)}$ represents a set of numbers of first channel control elements in the frequency domain resource in the search space corresponding to the determined aggregation level L, Y represents a start position for searching, and $N_{E\text{-}CCE}$ represents a quantity of first channel control elements in the frequency domain resource that is configured for the terminal by the base station and supports transmission of the first physical downlink control channel, where, $= 0, \cdots, L\text{-}1$; when the terminal is configured with a carrier indicator field, $m' = m + M^{(L)} \cdot n_{CI}$, where $n_{CI}$ is a value of the carrier indicator field, and when the terminal is not configured with a carrier indicator field, $m' = m$, where $m = 0, \cdots, M^{(L)}\text{-}1$, and $M^{(L)}$ is a number of first physical downlink control channel candidates in the search space corresponding to the aggregation level L; $N_{gap,L}$ represents a gap parameter $N_{gap}$ in the search space; or $N_{gap,L}$ represents a gap parameter corresponding to a different aggregation level L in the search space.

Step 1604: The terminal determines the E-CCE in the search space according to the number of the E-CCE.

After determining the search space through the foregoing steps, the terminal specifically acquires the E-CCE in the search space according to the previously determined number of the E-CCE and the determined search space, that is, the terminal acquires the E-CCE corresponding to each number. Then, the terminal may detect, in the search space, an E-PDCCH on which the base station transmits downlink control information, thereby acquiring, from the detected E-PDCCH, the downlink control information transmitted by the base station.

In the channel searching method provided in the embodiment, according to a frequency domain resource that is configured for a terminal by a base station and supports transmission of an E-PDCCH, and a position of an E-CCE in an RB (or in other words, a frequency domain resource) to which the E-CCE belongs, a number of the E-CCE is determined; according to the frequency domain resource configured by the base station and an aggregation level, a search space corresponding to the terminal is determined; and then according to the number of the E-CCE, the E-CCE in the search space is determined. This embodiment implements detection of a first physical downlink control channel such as an E-PDCCH or an R-PDCCH in a predefined search space; this embodiment can distribute E-PDCCHs at different aggregation levels into different RBs as far as possible, so that an eNB can schedule, according to channel information fed back by a terminal, the E-PDCCH to an E-CCE set in an RB with a better channel for transmission.

Embodiment 7 of the present invention provides a terminal. The terminal has a same structure as the structure illustrated in FIG. 12, and the terminal is further extended based on the terminal illustrated in FIG. 12. The content of the terminal illustrated in FIG. 12 is applicable to Embodiment 7 of the present invention, and therefore the same concept and function description are not repeated in Embodiment 7 of the present invention. For details, reference may be made to the description of the terminal illustrated in FIG. 12.

In Embodiment 7 of the present invention, a first search space determining module unit is specifically configured to determine the search space according to the frequency domain resource, the aggregation level of the first physical downlink control channel, and an gap parameter of the search space. The first search space determining module unit is further configured to determine the gap parameter of the search space, where the gap parameter corresponds to the aggregation level.

The first search space determining module unit specifically determines the search space by using the following formula:

$$S^{(L)} = \left\{ L \cdot \left\{ (Y + m' \cdot N_{gap,L}) \bmod \left\lfloor N_{E\text{-}CCE} / L \right\rfloor \right\} + i \right\}$$

where, $S^{(L)}$ represents a set of numbers of first channel control elements in the frequency domain resource in the search space corresponding to the determined aggregation level L, Y represents a start position for searching, and $N_{E\text{-}CCE}$ represents a quantity of first channel control elements that are configured for the terminal by the base station and support transmission of the first physical downlink control channel, where $i = 0, \cdots, L\text{-}1$; when the terminal is configured with a carrier indicator field, $m' = m + M^{(L)} \cdot n_{CI}$, where $n_{CI}$ is a value of the carrier indicator field, and when the terminal is not configured with a carrier indicator field, $m' = m$, where $m = 0, \cdots, M^{(L)}\text{-}1$, and $M^{(L)}$ is a number of first physical downlink control channel candidates in the search space corresponding to the aggregation level L; $N_{gap,L}$ represents a gap parameter $N_{gap}$ of the search space; or $N_{gap,L}$ represents a gap parameter which corresponds to a different aggregation level L of the search space.

With the terminal provided in this embodiment, E-PDCCHs at different aggregation levels can be distributed into different RBGs as far as possible, so that an eNB can schedule, according to channel information fed back by a terminal, the E-PDCCHs to an E-CCE set in an RB with a better channel for transmission.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A channel searching method, comprising:

   determining a number of a first channel control element according to a frequency domain resource that is configured for a terminal by a base station and supports transmission of a first physical downlink control channel and a position of the first channel control element in a resource block RB to which the first channel control element belongs;
   determining a search space according to the frequency domain resource and an aggregation level of the first physical downlink control channel; and
   determining the first channel control element in the search space according to the number of the first channel control element.

2. The method according to claim 1, wherein the determining a number of a first channel control element according to a frequency domain resource that is configured for a terminal by a base station and supports transmission of a first physical downlink control channel and a position of the first channel control element in a resource block RB to which the first channel control element belongs specifically comprises:

   determining the number of the first channel control element according to the position of the first channel control element in the RB to which the first channel control element belongs, a quantity of first channel control elements in the RB, and a position of the RB to which the first channel control element belongs, in RBs that is configured for the terminal by the base station and support transmission of the first physical downlink control channel.

3. The method according to claim 1, wherein the determining a number of a first channel control element according to a frequency domain resource that is configured for a terminal by a base station and supports transmission of a first physical downlink control channel and a position of the first channel control element in a resource block RB to which the first channel control element belongs specifically comprises:

   performing block interleaving for a first number of an RB configured for the terminal by the base station, to obtain a second number of the RB corresponding to the first number of the RB; and
   determining the number of the first channel control element according to the second number of the RB and the position of the first channel control element in the RB to which the first channel control element belongs.

4. The method according to claim 2, wherein the determining the number of the first channel control element according to the position of the first channel control element in the RB to which the first channel control element belongs, a quantity of first channel control elements in the RB, and a position of the RB to which the first channel control element belongs, in a RB that is configured for the terminal by the base station and support transmission of the first physical downlink control channel comprises:

determining, by using the following formula, the number of the first channel control element:

$$n_{E-CCE} = (m_{RBG} + n^{RB}_{E-CCE} \cdot N_{RBG} + m_{RB} \cdot N_{RBG} \cdot M_{E-CCE});$$

wherein, $n_{E-CCE}$ represents the number of the first channel control element, $m_{RBG}$ represents a position number of a resource block group RBG to which the first channel control element belongs, in RBGs that are configured for the terminal by the base station and support transmission of the first physical downlink control channel, $n^{RB}_{E-CCE}$ represents a position number of the first channel control element in the RB to which the first channel control element belongs, $m_{RB}$ represents a position number of the RB to which the first channel control element belongs, in an RBG, $N_{RBG}$ represents a quantity of RBGs that are configured for the terminal by the base station and support transmission of the first physical downlink control channel, and $M_{E-CCE}$ represents the quantity of first channel control elements in the RB.

5. The method according to claim 2, wherein the determining the number of the first channel control element according to the position of the first channel control element in the RB to which the first channel control element belongs, a quantity of first channel control elements in the RB, and a position of the RB to which the first channel control element belongs, in a RB that is configured for the terminal by the base station and support transmission of the first physical downlink control channel comprises:

determining, by using the following formula, the number of the first channel control element:

$$n_{E-CCE} = (m_{RBG} + m_{RB} \cdot N_{RBG} + n^{RB}_{E-CCE} \cdot N_{RBG} \cdot P);$$

wherein, $n_{E-CCE}$ represents the number of the first channel control element, $m_{RBG}$ represents a position number of an RBG to which the first channel control element belongs, in RBGs that are configured for the terminal by the base station and support transmission of the first physical downlink control channel, $n^{RB}_{E-CCE}$ represents a position number of the first channel control element in the RB to which the first channel control element belongs, $m_{RB}$ represents a position number of the RB to which the first channel control element belongs, in an RBG, $N_{RBG}$ represents a quantity of RBGs that are configured for the terminal by the base station and support transmission of the first physical downlink control channel, and P represents a quantity of RBs in the RBG.

6. The method according to claim 2, wherein the determining the number of the first channel control element according to the position of the first channel control element in the RB to which the first channel control element belongs, a quantity of first channel control elements in the RB, and a position of the RB to which the first channel control element belongs, in a RB that is configured for the terminal by the base station and support transmission of the first physical downlink control channel comprises:

determining, by using the following formula, the number of the first channel control element:

$$n_{E-CCE} = (m_{RBG} \cdot P \cdot M_{E-CCE} + m_{RB} \cdot M_{E-CCE} + n^{RB}_{E-CCE});$$

wherein, $n_{E-CCE}$ represents the number of the first channel control element, $m_{RBG}$ represents a position number of an RBG to which the first channel control element belongs, in RBGs that are configured for the terminal by the base station and support transmission of the first physical downlink control channel, $n^{RB}_{E-CCE}$ represents

a position number of the first channel control element in the RB to which the first channel control element belongs, $m_{RB}$ represents a position number of the RB to which the first channel control element belongs, in an RBG, $M_{E-CCE}$ represents the quantity of first channel control elements in the RB, and P represents a quantity of RBs in the RBG.

7. The method according to claim 3, wherein the determining the number of the first channel control element according to the second number of the RB and the position of the first channel control element in the RB to which the first channel control element belongs comprises:

   determining, by using the following formula, the number of the first channel control element:

   $$n_{E-CCE} = q_{RB} + n_{E-CCE}^{RB} \cdot N_{RB};$$

   wherein, $n_{E-CCE}^{RB}$ represents a position number of the first channel control element in the RB that is configured for the terminal by the base station and supports transmission of the first physical downlink control channel, $N_{RB}$ represents a quantity of RBs, and $q_{RB}$ represents the second number of the RB.

8. The method according to claim 3 or 7, wherein the performing block interleaving for a first number of an RB configured for the terminal by the base station, to obtain a second number of the RB corresponding to the first number of the RB comprises:

   setting a quantity of rows of an block interleaving matrix to $N_{\text{row}} = \lceil N_{RB}/(4P) \rceil \cdot P$, and a quantity of columns of the block interleaving matrix to $N_{colume}$;
   writing, by row, the first number of the RB into the block interleaving matrix;
   writing null into positions in column $n_1$ and column $n_2$ in m last rows of the block interleaving matrix, wherein

   $$m = 2(4N_{row} - N_{RB}^{E\text{-}PDCCH}),$$ and $N_{RB}^{E\text{-}PDCCH}$ represents a quantity of RBs that are configured for the terminal by the base station and support transmission of the first physical downlink control channel, wherein $n_1$ and $n_2$ are preset positive integers smaller than or equal to $N_{colume}$; and
   reading, by column, non-null values from the block interleaving matrix to obtain the second number of the RB corresponding to the first number of the RB.

9. The method according to claim 3 or 7, wherein the performing block interleaving for a first number of an RB configured for the terminal by the base station, to obtain a second number of the RB corresponding to the first number of the RB comprises:

   setting a quantity of rows of an block interleaving matrix to $N_{\text{row}} = \left\lceil N_{RB}^{E-PDCCH} / 3 \right\rceil$, and a quantity of columns of the block interleaving matrix to $N_{colume}$;
   writing, by row, the first number of the RB into the block interleaving matrix;

   writing null into $3N_{\text{row}} - N_{RB}^{E-PDCCH}$ positions in a last row of the block interleaving matrix, wherein $N_{RB}^{E\text{-}PDCCH}$

   represents a quantity of RBs that are configured for the terminal by the base station and support transmission of the first physical downlink control channel; and
   reading, by column, non-null values from the block interleaving matrix to obtain the second number of the RB corresponding to the first number of the RB.

10. The method according to claim 4, wherein the determining a search space according to the frequency domain resource and an aggregation level of the first physical downlink control channel comprises:

    determining the search space by using the following formula:

$$S^{L} = (Y + m' + i \cdot N_{RBG}) \bmod N_{E-CCE};$$

wherein, $S^{(L)}$ represents a set of numbers of first channel control elements in a search space corresponding to a determined aggregation level L, Y represents a start position for searching, and $N_{E-CCE}$ represents a quantity of first channel control elements that are configured for the terminal by the base station and support transmission of the first physical downlink control channel, wherein $i = 0, \cdots, L$-1; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein $m = 0, \cdots, M^{(L)}$-1, and $M^{(L)}$ represents a quantity of first physical downlink control channel candidates in the search space corresponding to the aggregation level L.

11. The method according to claim 5, wherein the determining a search space according to the frequency domain resource and an aggregation level of the first physical downlink control channel comprises:

   determining the search space by using the following formula:

$$S^{L} = \{L \cdot (Y + m') \bmod \lfloor N_{E-CCE} / L \rfloor + i \cdot N_{RBG}\} \bmod N_{E-CCE};$$

wherein, $S^{(L)}$ represents a set of numbers of first channel control elements in a search space corresponding to a determined aggregation level L, Y represents a start position for searching, and $N_{E-CCE}$ represents a quantity of first channel control elements that are configured for the terminal by the base station and support transmission of the first physical downlink control channel, wherein $i = 0, \cdots, L$-1; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein $m = 0, \cdots, M^{(L)}$-1, and $M^{(L)}$ represents a quantity of first physical downlink control channel candidates in the search space corresponding to the aggregation level L.

12. The method according to claim 6, wherein the determining a search space according to the frequency domain resource and an aggregation level of the first physical downlink control channel comprises:

   determining the search space by using the following formula:

$$S^{(L)} = L \cdot \left\{ (Y + m' \cdot P \cdot M_{E\text{-}CCE} / L) \bmod \lfloor N_{E\text{-}CCE} / L \rfloor \right\} + i;$$

wherein, $S^{(L)}$ represents a set of numbers of first channel control elements in a search space corresponding to a determined aggregation level L, Y represents a start position for searching, and $N_{E-CCE}$ represents a quantity of first channel control elements that are configured for the terminal by the base station and support transmission of the first physical downlink control channel, wherein $i = 0, \cdots, L$-1; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein $m = 0, \cdots, M^{(L)}$-1, and $M^{(L)}$ represents a quantity of first physical downlink control channel candidates in the search space corresponding to the aggregation level L.

13. The method according to claim 7, wherein the determining a search space according to the frequency domain resource and an aggregation level of the first physical downlink control channel comprises:

   determining the search space by using the following formula:

$$S^{L} = \{L \cdot (Y + m') \bmod \lfloor N_{E-CCE} / L \rfloor + i \cdot N_{RB}\} \bmod N_{E-CCE};$$

wherein, $S^{(L)}$ represents a set of numbers of first channel control elements in a search space corresponding to a determined aggregation level L, Y represents a start position for searching, and $N_{E-CCE}$ represents a quantity of first channel control elements that are configured for the terminal by the base station and support transmission of the first physical downlink control channel, wherein $i = 0, \cdots, L$-1; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein $m = 0, \cdots, M^{(L)}$-1, and $M^{(L)}$ represents a quantity of first physical downlink control channel candidates in the search space corresponding to the aggregation level L.

14. The method according to claim 1, wherein the determining a search space according to the frequency domain resource and an aggregation level of the first physical downlink control channel comprises:

determining the search space according to the frequency domain resource, the aggregation level of the first physical downlink control channel, and a gap parameter of the search space.

15. The method according to claim 14, wherein before the determining the search space according to the frequency domain resource, the aggregation level of the first physical downlink control channel, and a gap parameter of the search space, the method further comprises:

determining the gap parameter of the search space, wherein the gap parameter quantity is one, or one of the gap parameters corresponds to one aggregation level.

16. The method according to claim 15, wherein the determining the search space according to the gap parameter comprises:

determining the search space by using the following formula:

$$ S^{(L)} = \left\{ L \cdot \left\{ (Y + m' \cdot N_{gap,L}) \bmod \left\lfloor N_{\text{E-CCE}} / L \right\rfloor \right\} + i \right\} $$

wherein, $S^{(L)}$ represents a set of numbers of first channel control elements in the frequency domain resource in a search space corresponding to a determined aggregation level L, Y represents a start position for searching, and $N_{E\text{-}CCE}$ represents a quantity of first channel control elements in the frequency domain resource that is configured for the terminal by the base station and supports transmission of the first physical downlink control channel, wherein $i = 0, \cdots, L$-1 ; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$ , wherein $m = 0, \cdots, M^{(L)}$-1, and $M^{(L)}$ represents a quantity of first physical downlink control channel candidates in the search space corresponding to the aggregation level L; $N_{gap,L}$ represents a gap parameter $N_{gap}$ of the search space; or $N_{gap,L}$ represents a gap parameter which corresponds to a different aggregation level L of the search space.

17. The method according to claim 1, wherein the determining a number of a first channel control element according to a frequency domain resource that is configured for a terminal by a base station and supports transmission of a first physical downlink control channel and a position of the first channel control element in a resource block RB to which the first channel control element belongs comprises:

determining the number of the first channel control element in ascending order of position numbers according to a position number of the first channel control element in the RB to which the first channel control element belongs, a quantity of first channel control elements in the RB, and a position number of the RB to which the first channel control element belongs, in a RB that is configured for the terminal by the base station and support transmission of the first physical downlink control channel.

18. A channel searching method, comprising:

configuring, for each terminal, a frequency domain resource that supports transmission of a first physical downlink control channel;
determining a number of a first channel control element corresponding to each terminal according to the frequency domain resource corresponding to each terminal and a position of the first channel control element in a resource block RB;

determining a search space of each terminal according to the frequency domain resource corresponding to each terminal and an aggregation level of the first physical downlink control channel; and

determining the first channel control element in the search space of each terminal according to the number of the first channel control element.

19. The method according to claim 18, wherein the determining a number of the first channel control element corresponding to each terminal according to the frequency domain resource corresponding to each terminal and a position of a first channel control element in a resource block RB specifically comprises:

determining the number of the first channel control element corresponding to each terminal according to the position of the first channel control element in the RB to which the first channel control element belongs, a quantity of first channel control elements in the RB, and a position of the RB to which the first channel control element belongs, in a RB corresponding to each terminal.

20. The method according to claim 18, wherein the determining a number of the first channel control element corresponding to each terminal according to the frequency domain resource corresponding to each terminal and a position of a first channel control element in an RB specifically comprises:

performing block interleaving for a first number of an RB configured for each terminal to obtain a second number of the RB which corresponds to each terminal and corresponds to the first number of the RB; and

determining the number of the first channel control element corresponding to each terminal according to the second number of the RB corresponding to each terminal and the position of the first channel control element in the RB to which the first channel control element belongs.

21. A terminal, comprising:

a first number determining module unit, configured to determine a number of a first channel control element according to a frequency domain resource that is configured for the terminal by a base station and supports transmission of a first physical downlink control channel and a position of the first channel control element in a resource block RB to which the first channel control element belongs;

a first search space determining module unit, configured to determine a search space according to the frequency domain resource and an aggregation level of the first physical downlink control channel; and

a first channel control element determining module unit, configured to determine the first channel control element in the search space according to the number of the first channel control element.

22. The terminal according to claim 21, wherein the first number determining unit comprises:

a first number determining subunit, configured to determine the number of the first channel control element according to the position of the first channel control element in the RB to which the first channel control element belongs, a quantity of first channel control elements in the RB, and a position of the RB to which the first channel control element belongs, in RBs that is configured for the terminal by the base station and support transmission of the first physical downlink control channel.

23. The terminal according to claim 21, wherein the first number determining unit comprises:

a first interleaving subunit, configured to perform block interleaving for a first number of an RB configured for the terminal by the base station to obtain a second number of the RB corresponding to the first number of the RB; and

a second number determining subunit, configured to determine the number of the first channel control element according to the second number of the RB and the position of the first channel control element in the RB to which the first channel control element belongs.

24. The terminal according to claim 22, wherein the first number determining subunit is specifically configured to determine the number of the first channel control element by using the following formula:

$$n_{E-CCE} = (m_{RBG} + n_{E-CCE}^{RB} \cdot N_{RBG} + m_{RB} \cdot N_{RBG} \cdot M_{E-CCE});$$

wherein, $n_{E\text{-}CCE}$ represents the number of the first channel control element, $m_{RBG}$ represents a position number of a resource block group RBG to which the first channel control element belongs, in RBGs that are configured for the terminal by the base station and support transmission of the first physical downlink control channel, $n_{E\text{-}CCE}^{RB}$ represents a position number of the first channel control element in the RB to which the first channel control element belongs, $m_{RB}$ represents a position number of the RB to which the first channel control element belongs, in an RBG, $N_{RBG}$ represents a quantity of RBGs that are configured for the terminal by the base station and support transmission of the first physical downlink control channel, and $M_{E\text{-}CCE}$ represents the quantity of first channel control elements in the RB.

25. The terminal according to claim 22, wherein the first number determining subunit is specifically configured to determine the number of the first channel control element by using the following formula:

$$n_{E-CCE} = (m_{RBG} + m_{RB} \cdot N_{RBG} + n_{E-CCE}^{RB} \cdot N_{RBG} \cdot P);$$

wherein, $n_{E\text{-}CCE}$ represents the number of the first channel control element, $m_{RBG}$ represents a position number of an RBG to which the first channel control element belongs, in RBGs that are configured for the terminal by the base station and support transmission of the first physical downlink control channel, $n_{E-CCE}^{VRB}$ represents a position number of the first channel control element in the RB to which the first channel control element belongs, $m_{RB}$ represents a position number of the RB to which the first channel control element belongs, in an RBG, $N_{RBG}$ represents a quantity of RBGs that are configured for the terminal by the base station and support transmission of the first physical downlink control channel, and P represents a quantity of RBs in the RBG.

26. The terminal according to claim 22, wherein the first number determining subunit is specifically configured to determine the number of the first channel control element by using the following formula:

$$n_{E-CCE} = (m_{RBG} \cdot P \cdot M_{E-CCE} + m_{RB} \cdot M_{E-CCE} + n_{E-CCE}^{RB});$$

wherein, $n_{E\text{-}CCE}$ represents the number of the first channel control element, $m_{RBG}$ represents a position number of an RBG to which the first channel control element belongs, in RBGs that are configured for the terminal by the base station and support transmission of the first physical downlink control channel, $n_{E-CCE}^{VRB}$ represents a position number of the first channel control element in the RB to which the first channel control element belongs, $m_{RB}$ represents a position number of the RB to which the first channel control element belongs, in an RBG, $M_{E\text{-}CCE}$ represents the quantity of first channel control elements in the RB, and P represents a quantity of RBs in the RBG.

27. The terminal according to claim 23, wherein the second number determining subunit is specifically configured to determine the number of the first channel control element by using the following formula:

$$n_{E-CCE} = q_{RB} + n_{E-CCE}^{RB} \cdot N_{RB};$$

wherein, $n_{E-CCE}^{RB}$ represents a position number of the first channel control element in the RB that is configured for the terminal by the base station and supports transmission of the first physical downlink control channel, $N_{RB}$ represents a quantity of RBs, and $q_{RB}$ represents the second number of the RB.

28. The terminal according to claim 24, wherein the first search space determining unit is specifically configured to determine the search space by using the following formula:

$$S^L = (Y + m' + i \cdot N_{RBG}) \bmod N_{E-CCE} \; ;$$

wherein, $S^{(L)}$ represents a set of numbers of first channel control elements in a search space corresponding to a determined aggregation level L, Y represents a start position for searching, and $N_{E-CCE}$ represents a quantity of first channel control elements that are configured for the terminal by the base station and support transmission of the first physical downlink control channel, wherein $i = 0, \cdots, L-1$; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein $m=0, \cdots, M^{(L)}-1$, and $M^{(L)}$ represents a quantity of first physical downlink control channel candidates in the search space corresponding to the aggregation level L.

29. The terminal according to claim 25, wherein the first search space determining unit is specifically configured to determine the search space by using the following formula:

$$S^L = \{ L \cdot (Y + m') \bmod \lfloor N_{E-CCE} / L \rfloor + i \cdot N_{RBG} \} \bmod N_{E-CCE} \; ;$$

wherein, $S^{(L)}$ represents a set of numbers of first channel control elements in a search space corresponding to a determined aggregation level L, Y represents a start position for searching, and $N_{E-CCE}$ represents a quantity of first channel control elements that are configured for the terminal by the base station and support transmission of the first physical downlink control channel, wherein $i = 0, \cdots, L-1$; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein $m=0, \cdots, M^{(L)}-1$, and $M^{(L)}$ represents a quantity of first physical downlink control channel candidates in the search space corresponding to the aggregation level L.

30. The terminal according to claim 26, wherein the first search space determining unit is specifically configured to determine the search space by using the following formula:

$$S^{(L)} = L \cdot \left\{ (Y + m' \cdot P \cdot M_{E-CCE} / L) \bmod \lfloor N_{E-CCE} / L \rfloor \right\} + i \; ;$$

wherein, $S^{(L)}$ represents a set of numbers of first channel control elements in a search space corresponding to a determined aggregation level L, Y represents a start position for searching, and $N_{E-CCE}$ represents a quantity of first channel control elements that are configured for the terminal by the base station and support transmission of the first physical downlink control channel, wherein $i = 0, \cdots, L-1$; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein $m=0, \cdots, M^{(L)}-1$, and $M^{(L)}$ represents a quantity of first physical downlink control channel candidates in the search space corresponding to the aggregation level L.

31. The terminal according to claim 27, wherein the first search space determining unit is specifically configured to determine the search space by using the following formula:

$$S^L = \{ L \cdot (Y + m') \bmod \lfloor N_{E-CCE} / L \rfloor + i \cdot N_{RB} \} \bmod N_{E-CCE} \; ;$$

wherein, $S^{(L)}$ represents a set of numbers of first channel control elements in a search space corresponding to a determined aggregation level L, Y represents a start position for searching, and $N_{E-CCE}$ represents a quantity of first channel control elements that are configured for the terminal by the base station and support transmission of the first physical downlink control channel, wherein $i = 0, \cdots, L-1$; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein $m=0, \cdots, M^{(L)}-1$, and $M^{(L)}$ represents a quantity of first physical downlink control channel candidates in the search space corresponding to the aggregation level L.

32. The terminal according to claim 21, wherein the first search space determining module unit is specifically configured to determine the search space according to the frequency domain resource, the aggregation level of the first physical downlink control channel, and a gap parameter of the search space.

**33.** The terminal according to claim 32, wherein the first search space determining module unit is further configured to determine the gap parameter of the search space, wherein the gap parameter is one, or one of the gap parameters corresponds to one aggregation level.

**34.** The terminal according to claim 33, wherein the first search space determining module unit is specifically configured to determine the search space by using the following formula:

$$S^{(L)} = \{L \cdot \{(Y + m' \cdot N_{gap,L}) \bmod \lfloor N_{\text{E-CCE}} / L \rfloor\} + i\}$$

wherein, $S^{(L)}$ represents a set of numbers of first channel control elements in the frequency domain resource in a search space corresponding to a determined aggregation level L, Y represents a start position for searching, and $N_{E-CCE}$ represents a quantity of first channel control elements in the frequency domain resource that is configured for the terminal by the base station and supports transmission of the first physical downlink control channel, wherein $i = 0, \cdots, L$-1; when the terminal is configured with a carrier indicator field, $m' = m + M^{(L)} \cdot n_{CI}$, wherein $n_{CI}$ represents a value of the carrier indicator field, and when the terminal is not configured with a carrier indicator field, $m' = m$, wherein m = 0, $\cdots$, $M^{(L)}$-1, and $M^{(L)}$ represents a quantity of first physical downlink control channel candidates in the search space corresponding to the aggregation level L; $N_{gap,L}$ represents a gap parameter $N_{gap}$ of the search space; or $N_{gap,L}$ represents a gap parameter corresponding to the aggregation level L.

**35.** The method according to claim 21, wherein the first number determining module unit is specifically configured to determine the number of the first channel control element in ascending order of position numbers according to a position number of the first channel control element in the RB to which the first channel control element belongs, a quantity of first channel control elements in the RB, and a position number of the RB to which the first channel control element belongs, in a RB that is configured for the terminal by the base station and support transmission of the first physical downlink control channel.

**36.** A base station, comprising:

a configuring unit, configured to configure for each terminal, a frequency domain resource that supports transmission of a first physical downlink control channel;
a second number determining unit, configured to determine a number of a first channel control element corresponding to each terminal according to the frequency domain resource corresponding to each terminal and a position of the first channel control element in a resource block RB;
a second search space determining unit, configured to determine a search space of each terminal according to the frequency domain resource corresponding to each terminal and an aggregation level of the first physical downlink control channel; and
a second channel control element determining unit, configured to determine the first channel control element in the search space of each terminal according to the number of the first channel control element.

**37.** The base station according to claim 36, wherein the second number determining unit comprises:

a third number determining subunit, configured to determine the number of the first channel control element corresponding to each terminal according to the position of the first channel control element in the RB to which the first channel control element belongs, a quantity of first channel control elements in the RB, and a position of the RB to which the first channel control element belongs, in a RB corresponding to each terminal.

**38.** The base station according to claim 36, wherein the second number determining unit comprises:

a second interleaving subunit, configured to perform block interleaving for a first number of an RB configured for each terminal to obtain a second number of the RB which corresponds to each terminal and corresponds to the first number of the RB; and
a fourth number determining subunit, configured to determine the number of the first channel control element corresponding to each terminal according to the second number of the RB corresponding to each terminal and the position of the first channel control element in the RB to which the first channel control element belongs.

$l = 0$        $l = 6$   $l = 0$        $l = 6$

Even timeslot      Odd timeslot

OFDM symbol

FIG. 1

| Determine a number of a first channel control element according to a frequency domain resource that is configured for a terminal by a base station and supports transmission of a first physical downlink control channel and a position of the first channel control element in a resource block to which the first channel control element belongs | ~201 |

↓

| Determine a search space according to the frequency domain resource and an aggregation level of the first physical downlink control channel | ~202 |

↓

| Determine the first control channel element in the search space according to the number of the first channel control element | ~203 |

FIG. 2

Configure, for each terminal, a frequency domain resource that supports transmission of a first physical downlink control channel ~301

Determine a number of a first channel control element corresponding to each terminal according to the frequency domain resource corresponding to each terminal and a position of the first channel control element in a resource block RB ~302

Determine a search space of each terminal according to the frequency domain resource corresponding to each terminal and an aggregation level of the first physical downlink control channel ~303

Determine the first channel control element in the search space of each terminal according to the number of the first channel control element ~304

FIG. 3

A terminal acquires RBG information that is configured for the terminal by a base station and supports transmission of an E-PDCCH ~401

The terminal determines a number of an E-CCE according to a position of an RBG to which the E-CCE belongs, in RBGs configured by the base station, a quantity of E-CCEs in an RB, a position of the E-CCE in the RB to which the E-CCE belongs, a position of the RB to which the E-CCE belongs, in the RBG configured by the base station, and a quantity of RBGs configured by the base station ~402

The terminal determines a search space of the terminal according to the quantity of E-CCEs configured by the base station and a configuration of a carrier indicator field of the terminal ~403

The terminal determines the E-CCE in the search space according to the number of the E-CCE ~404

FIG. 4

| 0 | 1 | 2 | 3 | 4 | 5 | 6 | 7 | 8 | 9 | 10 | 11 | 12 | 13 | 14 | 15 | 16 |

FIG. 5

| 0 | 1 | 2 | 3 | 4 | 5 | 6 | 7 | 8 | 9 | 10 | 11 | 12 | 13 | 14 | 15 | 16 |

FIG. 6

FIG. 7

A terminal acquires RBG information that is configured for the terminal by a base station and supports transmission of an E-PDCCH ~801

The terminal determines a number of an E-CCE according to a position of an RBG to which the E-CCE belongs, in RBGs configured by the base station, a position of the E-CCE in an RB to which the E-CCE belongs, a position of the RB to which the E-CCE belongs, in the RBG configured by the base station, a quantity of E-CCEs in the RB, and a quantity of RBs in the RBG ~802

The terminal determines a search space of the terminal according to a determined aggregation level L, the quantity of RBs in the RBG, a quantity of E-CCEs that are configured for the terminal by the base station and support transmission of the E-PDCCH, and a configuration of a carrier indicator field of the terminal ~803

The terminal determines the E-CCE in the search space according to the number of the E-CCE ~804

FIG. 8

FIG. 9

A terminal acquires RB information that is configured for the terminal by a base station and supports transmission of an E-PDCCH ~1001

The terminal performs block interleaving for a first number of an RB configured for the terminal by the base station to obtain a second number of the RB corresponding to the first number of the RB ~1002

The terminal determines a number of an E-CCE according to the second number of the RB and a position of the E-CCE in the RB to which the E-CCE belongs ~1003

The terminal determines a search space according to a frequency domain source that is configured for the terminal by the base station and supports transmission of the E-PDCCH, and an aggregation level of the E-PDCCH ~1004

The terminal determines the E-CCE in the search space according to the number of the E-CCE ~1005

FIG. 10

FIG. 11

FIG. 12

First number determining unit

1211

First number determining subunit

First interleaving subunit

Second number determining subunit

First search space determining unit

First control channel element determining unit

1222

1201

1232

1202

1203

FIG. 13

Configuring unit

Second number determining unit

Second search space determining unit

Second control channel element determining unit

1401

1402

1403

1404

FIG. 14

Configuring unit

1401

1412 Second number determining unit

Third number determining subunit

Second interleaving subunit

1422

Fourth number determining subunit

1402

1432

Second search space determining unit

1403

Second control channel element determining unit

1404

FIG. 15

A terminal acquires RB information that is configured for the terminal by a base station and supports transmission of an E-PDCCH or supports localized transmission of an E-PDCCH

~801

The terminal determines a number of an E-CCE according to a position of the E-CCE in an RB to which the E-CCE belongs, a quantity of E-CCEs in the RB, and a position of the RB

~802

Determine at least one gap parameter of a first physical downlink control channel candidate; and determine a search space according to the at least one gap parameter of the first physical downlink control channel candidate

~803

The terminal determines the E-CCE in the search space according to the number of the E-CCE

~804

FIG. 16

FIG. 17

# INTERNATIONAL SEARCH REPORT

| International application No. |
|---|
| **PCT/CN2012/079349** |

### A.  CLASSIFICATION OF SUBJECT MATTER

H04L 5/00 (2006.01) i

According to International Patent Classification (IPC) or to both national classification and IPC

### B.  FIELDS SEARCHED

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

VEN: E?PDCCH, enhanc???, physical???, downlink???, control, channel???, R?PDCCH, relay???, first, resource, block???, RB, location???, unit???, search???, space???, aggregate???, converg???, class???, sort???, number, interlac???, base, station???, UE, user???, equipment???

CNTXT, CNABS, CNKI: HUAWEI, ZTE, DATANG, E?PDCCH, enhanced physical downlink control channel, R?PDCCH, relay physical downlink control channel, the first physical downlink control channel, channel control unit, resource block, RB, location, control unit, number, sequence number, determine, search space, aggregation level, space, interlacing, base station, UE, user equipment, terminal

### C.  DOCUMENTS CONSIDERED TO BE RELEVANT

| Category* | Citation of document, with indication, where appropriate, of the relevant passages | Relevant to claim No. |
|---|---|---|
| A | CN 102316595 A (ZTE CORP.), 11 January 2012 (11.01.2012), the whole document | 1-38 |
| A | CN 102170703 A (ACADEMY OF TELECOMMUNICATION TECHNOLOGY), 31 August 2011 (31.08.2011), the whole document | 1-38 |
| A | CN 102342035 A (LG ELECTRONICS INC.), 01 February 2012 (01.02.2012), the whole document | 1-38 |
| A | CN 102111880 A (ACADEMY OF TELECOMMUNICATION TECHNOLOGY), 29 June 2011 (29.06.2011), the whole document | 1-38 |

☐ Further documents are listed in the continuation of Box C.        ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 December 2012 (06.12.2012) | **27 December 2012 (27.12.2012)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>**ZHANG, Boyue**<br>Telephone No.: (86-10) **62411458** |

Form PCT/ISA/210 (second sheet) (July 2009)

**INTERNATIONAL SEARCH REPORT**
Information on patent family members

International application No.

**PCT/CN2012/079349**

| Patent Documents referred in the Report | Publication Date | Patent Family | Publication Date |
|---|---|---|---|
| CN 102316595 A | 11.01.2012 | WO 2012152113 A1 | 15.11.2012 |
| CN 102170703 A | 31.08.2011 | WO 2012152149 A1 | 15.11.2012 |
| CN 102342035 A | 01.02.2012 | EP 2405592 A2 | 11.01.2012 |
| | | KR 20100099655 A | 13.09.2010 |
| | | US 2011317610 A1 | 29.12.2011 |
| | | WO 2010101366 A2 | 10.09.2010 |
| | | WO 2010101366 A3 | 25.11.2010 |
| CN 102111880 A | 29.06.2011 | None | |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210064735